# EUROPEAN PATENT APPLICATION

(11) **EP 4 815 518 A1**
(43) Date of publication of application: **30.09.2026**
(21) Application number: 24906006.2
(22) Date of filing: 26.11.2024
(51) Int. Cl.: H04W 4/50

(54) **SERVICE GENERATION METHOD AND APPARATUS, AND NETWORK DEVICE**

(30) Priority: 19.12.2023 CN 202311758790
(71) Applicant: Huawei Technologies Co., Ltd., Shenzhen, Guangdong 518129 (CN)
(72) Inventor: QIAO, Yunfei, Shenzhen, Guangdong 518129 (CN); ZHANG, Gongzheng, Shenzhen, Guangdong 518129 (CN); WANG, Jian, Shenzhen, Guangdong 518129 (CN)
(74) Representative: Thun, Clemens
(86) International application number: PCT/CN2024/134457
(87) International publication number: WO 2025/130521

(57) **Abstract**

A service setup method and apparatus, and a network device are disclosed. When the network device does not support a service that needs to be executed, a terminal device may send a request instruction to the network device and/or a service setup system. After receiving the request instruction from the terminal device, the network device and/or the service setup system may generate a service context of a target service, and maintain the service context of the target service, so that the terminal device can execute the target service by using the network device and/or the service setup system, thereby ensuring continuity of running the target service by the terminal device.

## Description

This application claims priority to Chinese Patent Application No. 202311758790.5, filed with the China National Intellectual Property Administration on December 19, 2023 and entitled "SERVICE SETUP METHOD AND APPARATUS, AND NETWORK DEVICE", which is incorporated herein by reference in its entirety.

### TECHNICAL FIELD

The present invention relates to the field of communication technologies, and in particular, to a service setup method and apparatus, and a network device.

### BACKGROUND

To achieve the future vision of inclusive intelligence, wireless network architectures may be intelligently evolved. For example, artificial intelligence (artificial intelligence, AI) may be deeply integrated with wireless networks, so that the wireless networks not only provide conventional communication connection services, but also provide computing and AI services, and enable terminal devices to have specific AI capabilities. If a network does not have an AI service that needs to be executed by a terminal device, the network cannot provide the AI service for the terminal device.

### SUMMARY

To resolve the foregoing problem, an embodiment of this application provides a service setup method. When a network device does not support a service that needs to be executed by a terminal device, the network device and/or a core network provide a service for the terminal device. In addition, this application further provides a service setup apparatus and a network device corresponding to the service setup method.

Therefore, the following technical solutions are used in embodiments of this application.

According to a first aspect, an embodiment of this application provides a service setup method. The method is performed by a network device and a core network, and the method includes: The network device sends a seventh request instruction to the core network, where the seventh request instruction is used to request the core network to provide service function information supporting a target service, and the service function information includes a service type and/or a function type that each network element supporting the target service is capable of providing. The core network receives the seventh request instruction, and sends the service function information to the network device. The network device determines all or a part of a service context of the target service based on the service type and/or the function type that each network element supporting the target service is capable of providing, where the service context of the target service includes related resources of one or more network elements supporting the target service.

In this implementation, when the network device does not support the target service, the network device may send the seventh request instruction to the core network, to request the core network to send, to the network device, the service type and/or the function type that each network element supporting the target service is capable of providing. After obtaining the service type and/or the function type that each network element supporting the target service is capable of providing, the network device may construct a service context of the target service, so that the network device can run the target service in the core network, and the network device can support the target service.

In an implementation, the method further includes: The network device sets the service context of the target service to be in an inactive state, where the inactive state means that the related resources of the one or more network elements supporting the target service are in a sleep state.

In this implementation, after generating the service context of the target service, the network device may set the related resources of the one or more network elements supporting the target service to be in the sleep state, to avoid occupying a large quantity of resources of each network element in the core network because the related resources of the one or more network elements supporting the target service are in an operating state when the target service is not executed.

In an implementation, before the network device sends the seventh request instruction to the core network, the method further includes: The network device receives a first request instruction sent by a terminal device, where the first request instruction is used to request the target service supported by the network device. The network device detects whether the service context of the target service exists locally. That the network device sends the seventh request instruction to the core network specifically includes: when determining that the service context of the target service does not exist locally, the network device sends the seventh request instruction to the core network.

In an implementation, the method further includes: when determining that the service context of the target service exists locally, the network device determines whether an area identifier in the service context of the target service is the same as a local area identifier, where the area identifier is used to distinguish a geographical area in which the service context takes effect. When the area identifier in the service context of the target service is different from the local area identifier, the network device sends a ninth request instruction to the terminal device, where the ninth request instruction is used to request the terminal device to determine whether the network device generates a service context of the target service again.

In this implementation, the area identifier may be added to the service context constructed by the network device. The network device may determine, based on whether the area identifier in the service context of the target service is the same as the local area identifier, whether the network device connected to the terminal device is switched. This ensures security of executing the target service by the terminal device.

In an implementation, the method further includes: The network device sends a first response instruction to the terminal device, where the first response instruction is used to notify the terminal device that the network device supports the target service.

In this implementation, after constructing the service context of the target service through the core network, the network device may support the target service. The network device may send the first response instruction to the terminal device, so that the terminal device executes the target service by using the network device.

In an implementation, the method further includes: The network device receives an eighth request instruction sent by the terminal device, where the eighth request instruction is used to request the network device to execute the target service. The network device sets the service context of the target service to be in the active state.

In this implementation, after supporting the target service through the core network, the network device may send a service setup instruction to the terminal device, to notify the terminal device that the target service is supported locally, so that the terminal device can execute the target service by using the network device. After receiving an execution instruction from the terminal device, the network device may set the related resources of the one or more network elements supporting the target service to be in the operating state, so that the network device executes the target service through the core network.

In an implementation, the method further includes: The network device configures an air interface resource for the terminal device, where the air interface resource is used to carry traffic for transmitting the target service between the terminal device and the network device.

In this implementation, the network device configures the air interface resource for the terminal device, and the air interface resource may carry the traffic for transmitting the target service between the terminal device and the network device, so that the network device executes the target service for the terminal device.

In an implementation, the method further includes: The network device broadcasts or multicasts a system message indicating that the network device supports the target service.

In this implementation, the network device may broadcast or multicast the locally supported target service to more terminal devices, so that the network device can provide the target service for more terminal devices.

In an implementation, the network device sends a tenth request instruction to the terminal device, where the tenth request instruction is used to request to query for a service context in the terminal device. The network device receives a tenth response instruction sent by the terminal device, where the tenth response instruction includes at least one service context identifier. The network device updates, based on the at least one service context identifier, a service context corresponding to the at least one service context identifier.

In an implementation, that the network device updates, based on the at least one service context identifier, the service context corresponding to the at least one service context identifier specifically includes: The network device broadcasts an eleventh request instruction, where the eleventh request instruction is used to request another network device to provide a service context corresponding to the at least one service context identifier. The network device receives an eleventh response instruction, where the eleventh response instruction includes the service context corresponding to the at least one service context identifier. The network device updates, based on the service context corresponding to the at least one service context identifier, the service context corresponding to the at least one service context identifier.

According to a second aspect, an embodiment of this application provides a service setup method. The method is performed by a network device, and the method includes: sending a tenth request instruction to a terminal device, where the tenth request instruction is used to request to query for a service context in the terminal device; receiving a tenth response instruction sent by the terminal device, where the tenth response instruction includes at least one service context; broadcasting the eleventh request instruction, where the eleventh request instruction is used to request to provide a service context corresponding to the at least one service context identifier; receiving an eleventh response instruction, where the eleventh response instruction includes the service context corresponding to the at least one service context identifier; and updating, based on the service context corresponding to the at least one service context identifier, a service context corresponding to the at least one service context identifier.

According to a third aspect, an embodiment of this application provides a service setup method. The method is performed by a service setup system, and the method includes: receiving a second request instruction sent by a terminal device, where the second request instruction is used to request a target service supported by the service setup system, and the second request instruction includes a service context identifier; determining a service context of the target service based on the service context identifier, where the service context includes related resources of one or more network elements supporting the target service; and sending a second response instruction to the terminal device, where the second response instruction is used to notify the terminal device that the service setup system supports the target service.

In this implementation, after receiving the second request instruction of the terminal device forwarded by the network device, the service setup system may generate the service context of the target service, and determine the service context of the target service. When the network device does not support the target service, the service setup system may enable the terminal device to execute the target service by using the service setup system, to ensure continuity of running the target service by the terminal device.

In an implementation, before sending the second response instruction to the terminal device, the method further includes: setting the target service to be in an inactive state, where the inactive state means that the related resources of the one or more network elements supporting the target service are in a sleep state.

In this implementation, after generating the service context of the target service, the service setup system may set the related resources of the one or more network elements supporting the target service to be in the sleep state, to avoid occupying a large quantity of resources of the system because the related resources of the one or more network elements supporting the target service are in an operating state when the target service is not executed.

In an implementation, determining the service context of the target service based on the service context identifier specifically includes: generating a service strategy of the target service based on the service context identifier; and configuring, based on the service strategy of the target service, a related resource of each network element executing the target service.

In this implementation, after receiving the service context identifier of the target service, the service setup system may generate the service strategy of the target service, so that the service setup system schedules the related resources of the one or more network elements supporting the target service, to support the target service.

In an implementation, the network elements executing the target service include a service strategy network element, an access and mobility management function AMF network element, a service session management function network element, a service user plane function network element, and a database. Determining the service context of the target service based on the service context identifier specifically includes: The AMF network element receives the second request instruction sent by the terminal device. The AMF network element sends a third request instruction to the service strategy network element, where the third request instruction is used to request the service strategy network element to generate the service strategy of the target service. The service strategy network element sends a fourth request instruction to the database, where the fourth request instruction is used to request the database to provide a data pool, a model pool, and a computation pool. The database sends a fourth response instruction to the service strategy network element, where the fourth response instruction is used to notify the service strategy network element that the database configures the data pool, the model pool, and the computation pool. The service strategy network element sends a fifth request instruction to the service session management function network element, where the fifth request instruction is used to request the service session management function network element to establish traffic channels between the local end, the terminal device, the service strategy network element, the AMF network element, the data pool, the model pool, and the computation pool on the service user plane function network element. The service session management function network element sends a fifth response instruction to the service strategy network element, where the fifth response instruction is used to notify the service strategy network element that the service session management function network element completes establishment of traffic channels between the related resources of the network elements. The service strategy network element sends a third response instruction to the AMF network element, where the third response instruction is used to notify the AMF network element that the service strategy network element completes generation of the service context of the target service. The AMF network element sends the second response instruction to the terminal device, where the second response instruction is used to notify the terminal device that the service setup system supports the target service.

In an implementation, the method further includes: receiving an eleventh request instruction sent by a network device, where the eleventh request instruction is used to request another network device to provide a service context corresponding to at least one service context identifier; and sending an eleventh response instruction to the network device, where the eleventh response instruction includes the service context corresponding to the at least one service context identifier.

In this implementation, the service setup system may deliver the service context of the target service to the network device connected to the terminal device, so that the terminal device can run the target service in the service setup system by using the network device, and the network device can support the target service.

In an implementation, before receiving the first request instruction sent by the terminal device, the method further includes: receiving the first request instruction sent by the network device; and sending service function information to the network device, where the service function information includes a service type and/or a function type that each network element supporting the target service is capable of providing, and the service type and/or the function type that each network element supporting the target service is capable of providing are/is used to generate the service context of the target service in the network device.

In this implementation, when the network device does not support the target service, the network device may obtain, from the service setup system, the service type and/or the function type that each network element supporting the target service is capable of providing, to construct the service context of the target service, so that the network device can support the target service.

According to a fourth aspect, an embodiment of this application provides a service setup method. The method is performed by a network device, and the method includes: receiving a first request instruction sent by a terminal device, where the first request instruction is used to request a target service supported by the network device , and the first request instruction includes a service context identifier; when determining that a service context of the target service does not exist locally, sending a seventh request instruction to a service setup system, where the seventh request instruction is used to request a core network to provide service function information supporting the target service, and the service function information includes a service type and/or a function type that each network element supporting the target service is capable of providing; receiving the service function information sent by the service setup system; and determining all or a part of the service context of the target service based on the service type and/or the function type that each network element supporting the target service is capable of providing, where the service context of the target service includes related resources of one or more network elements supporting the target service.

In this implementation, when the network device does not support the target service, the network device may send a seventh request instruction to the service setup system, to request the service setup system to send, to the network device, the service type and/or the function type that each network element supporting the target service is capable of providing. After obtaining the service type and/or the function type that each network element supporting the target service is capable of providing, the network device may construct a service context of the target service, so that the network device can run the target service in the service setup system, and the network device can support the target service.

In an implementation, the method further includes: setting the service context of the target service to be in an inactive state, where the inactive state means that the related resources of the one or more network elements supporting the target service are in a sleep state.

In this implementation, after generating the service context of the target service, the network device may set the related resources of the one or more network elements supporting the target service to be in the sleep state, to avoid occupying a large quantity of resources of each network element in the core network because the related resources of the one or more network elements supporting the target service are in an operating state when the target service is not executed.

In an implementation, the method further includes: when determining that the service context of the target service exists locally, determining whether an area identifier in the service context of the target service is the same as a local area identifier, where the area identifier is used to distinguish a geographical area in which the service context takes effect; and when the area identifier in the service context of the target service is different from the local area identifier, sending a ninth request instruction to the terminal device, where the ninth request instruction is used to request the terminal device to determine whether the network device generates a service context of the target service again.

In this implementation, the area identifier may be added to the service context constructed by the network device. The network device may determine, based on whether the area identifier in the service context of the target service is the same as the local area identifier, whether the network device connected to the terminal device is switched. This ensures security of executing the target service by the terminal device.

In an implementation, the method further includes: receiving an eighth request instruction sent by the terminal device, where the eighth request instruction is used to request the network device to execute the target service; and setting the service context of the target service to be in an active state.

In this implementation, after supporting the target service by using the service setup system, the network device may send a service setup instruction to the terminal device, to notify the terminal device that the target service is supported locally, so that the terminal device can execute the target service by using the network device. After receiving an execution instruction from the terminal device, the network device may set the related resources of the one or more network elements supporting the target service to be in the operating state, so that the network device executes the target service by using the service setup system.

In an implementation, the method further includes: configuring an air interface resource for the terminal device, where the air interface resource is used to carry traffic for transmitting the target service between the terminal device and the network device.

In this implementation, the network device configures the air interface resource for the terminal device, and the air interface resource may carry the traffic for transmitting the target service between the terminal device and the network device, so that the network device executes the target service for the terminal device.

In an implementation, the method further includes: broadcasting or multicasting a system message, where the system message indicates that the network device supports the target service.

In this implementation, the network device may broadcast or multicast the locally supported target service to more terminal devices, so that the network device can provide the target service for more terminal devices.

In an implementation, a tenth request instruction is sent to the terminal device, where the tenth request instruction is used to request to query for a service context in the terminal device. The network device receives a tenth response instruction sent by the terminal device, where the tenth response instruction includes at least one service context identifier. The network device updates, based on the at least one service context identifier, a service context corresponding to the at least one service context identifier.

In an implementation, that the network device updates, based on the at least one service context identifier, the service context corresponding to the at least one service context identifier specifically includes: The network device broadcasts an eleventh request instruction, where the eleventh request instruction is used to request another network device to provide a service context corresponding to the at least one service context identifier. The network device receives an eleventh response instruction, where the eleventh response instruction includes the service context corresponding to the at least one service context identifier. The network device updates, based on the service context corresponding to the at least one service context identifier, the service context corresponding to the at least one service context identifier.

According to a fifth aspect, an embodiment of this application provides a service setup apparatus, including: a transceiver unit, configured to send a seventh request instruction to a core network, where the seventh request instruction is used to request the core network to provide service function information supporting a target service, the service function information includes a service type and/or a function type that each network element supporting the target service is capable of providing, and the transceiver unit is further configured to receive the service function information sent by the core network; and a processing unit, configured to determine all or a part of a service context of the target service based on the service type and/or the function type that each network element supporting the target service is capable of providing, where the service context of the target service includes related resources of one or more network elements supporting the target service.

In an implementation, the processing unit is further configured to set the service context of the target service to be in an inactive state, where the inactive state means that the related resources of the one or more network elements supporting the target service are in a sleep state.

In an implementation, the transceiver unit is further configured to receive a first request instruction sent by a terminal device, where the first request instruction is used to request the target service supported by the network device. The processing unit is further configured to detect whether the service context of the target service exists locally. The transceiver unit is further configured to: when it is determined that the service context of the target service does not exist locally, send the seventh request instruction to the core network.

In an implementation, the processing unit is further configured to: when determining that the service context of the target service exists locally, determine whether an area identifier in the service context of the target service is the same as a local area identifier, where the area identifier is used to distinguish a geographical area in which the service context takes effect; and when the area identifier in the service context of the target service is different from the local area identifier, send a ninth request instruction to the terminal device, where the ninth request instruction is used to request the terminal device to determine whether the network device generates a service context of the target service again.

In an implementation, the transceiver unit is further configured to send a first response instruction to the terminal device, where the first response instruction is used to notify the terminal device that the network device supports the target service.

In an implementation, the transceiver unit is further configured to receive an eighth request instruction sent by the terminal device, where the eighth request instruction is used to request the network device to execute the target service. The processing unit is further configured to set the service context of the target service to be in an active state.

In an implementation, the processing unit is further configured to configure an air interface resource for the terminal device, where the air interface resource is used to carry traffic for transmitting the target service between the terminal device and the network device.

In an implementation, the transceiver unit is further configured to broadcast or multicast a system message, where the system message indicates that the network device supports the target service.

In an implementation, the transceiver unit is further configured to send a tenth request instruction to the terminal device, where the tenth request instruction is used to request to query for a service context in the terminal device; and receive a tenth response instruction sent by the terminal device, where the tenth response instruction includes at least one service context identifier. The processing unit is further configured to update, based on the at least one service context identifier, a service context corresponding to the at least one service context identifier.

In an implementation, the transceiver unit is specifically configured to broadcast an eleventh request instruction, where the eleventh request instruction is used to request another network device to provide a service context corresponding to the at least one service context identifier. The transceiver unit is specifically configured to receive an eleventh response instruction, where the eleventh response instruction includes the service context corresponding to the at least one service context identifier. The processing unit is specifically configured to update, based on the service context corresponding to the at least one service context identifier, the service context corresponding to the at least one service context identifier.

According to a sixth aspect, an embodiment of this application provides a service setup apparatus, including: a transceiver unit, configured to send a tenth request instruction to a terminal device, where the tenth request instruction is used to request to query for a service context in the terminal device, the transceiver unit is further configured to receive a tenth response instruction sent by the terminal device, the tenth response instruction includes at least one service context, the transceiver unit is further configured to broadcast an eleventh request instruction, the eleventh request instruction is used to request to provide a service context corresponding to the at least one service context identifier, the transceiver unit is further configured to receive an eleventh response instruction, and the eleventh response instruction includes the service context corresponding to the at least one service context identifier; and a processing unit, configured to update, based on the service context corresponding to the at least one service context identifier, a service context corresponding to the at least one service context identifier.

According to a seventh aspect, an embodiment of this application provides a service setup apparatus, including: a transceiver unit, configured to receive a second request instruction sent by a terminal device, where the second request instruction is used to request a target service supported by a service setup system, and the second request instruction includes a service context identifier; and a processing unit, configured to determine a service context of the target service based on the service context identifier, where the service context includes related resources of one or more network elements supporting the target service. The transceiver unit is further configured to send a second response instruction to the terminal device, where the second response instruction is used to notify the terminal device that the service setup system supports the target service.

In an implementation, the processing unit is further configured to set the target service to be in an inactive state, where the inactive state means that the related resources of the one or more network elements supporting the target service are in a sleep state.

In an implementation, the processing unit is specifically configured to: generate a service strategy of the target service based on the service context identifier; and configure, based on the service strategy of the target service, a related resource of each network element executing the target service.

In an implementation, the transceiver unit is further configured to: receive an eleventh request instruction sent by a network device, where the eleventh request instruction is used to request another network device to provide a service context corresponding to at least one service context identifier; and send an eleventh response instruction to the network device, where the eleventh response instruction includes the service context corresponding to the at least one service context identifier.

In an implementation, the transceiver unit is further configured to: receive the first request instruction sent by the network device; and sending service function information to the network device, where the service function information includes a service type and/or a function type that each network element supporting the target service is capable of providing, and the service type and/or the function type that each network element supporting the target service is capable of providing are/is used to generate the service context of the target service in the network device.

According to an eighth aspect, an embodiment of this application provides a service setup apparatus, including: a transceiver unit, configured to receive a first request instruction sent by a terminal device, where the first request instruction is used to request a target service supported by the network device, the first request instruction includes a service context identifier, the transceiver unit is further configured to: when it is determined that a service context of the target service does not exist locally, send a seventh request instruction to a service setup system, the seventh request instruction is used to request a core network to provide service function information supporting the target service, the service function information includes a service type and/or a function type that each network element supporting the target service is capable of providing, and the transceiver unit is further configured to receive the service function information sent by the service setup system; and a processing unit, configured to determine all or a part of the service context of the target service based on the service type and/or the function type that each network element supporting the target service is capable of providing, where the service context of the target service includes related resources of one or more network elements supporting the target service.

In an implementation, the processing unit is further configured to set the service context of the target service to be in an inactive state, where the inactive state means that the related resources of the one or more network elements supporting the target service are in a sleep state.

In an implementation, the processing unit is further configured to: when determining that the service context of the target service exists locally, determine whether an area identifier in the service context of the target service is the same as a local area identifier, where the area identifier is used to distinguish a geographical area in which the service context takes effect. The transceiver unit is further configured to: when the area identifier in the service context of the target service is different from the local area identifier, send a ninth request instruction to the terminal device, where the ninth request instruction is used to request the terminal device to determine whether the network device generates a service context of the target service again.

In an implementation, the transceiver unit is further configured to receive an eighth request instruction sent by the terminal device, where the eighth request instruction is used to request the network device to execute the target service. The processing unit is further configured to set the service context of the target service to be in an active state.

In an implementation, the processing unit is further configured to configure an air interface resource for the terminal device, where the air interface resource is used to carry traffic for transmitting the target service between the terminal device and the network device.

In an implementation, the transceiver unit is further configured to broadcast or multicast a system message, where the system message indicates that the network device supports the target service.

According to a ninth aspect, an embodiment of this application provides a core network, including at least one network element. The at least one network element performs the possible implementations of the first aspect or the possible implementations of the third aspect.

According to a tenth aspect, an embodiment of this application provides a computer-readable storage medium, including computer program instructions. When the computer program instructions are executed by a core network, the core network performs the possible implementations of the first aspect or the possible implementations of the third aspect.

According to an eleventh aspect, an embodiment of this application provides a computer program product including instructions. The computer program product stores the instructions, and when the instructions are executed by a core network, the core network is enabled to implement the possible implementations of the first aspect or the possible implementations of the third aspect.

According to a twelfth aspect, an embodiment of this application provides a network device, including at least one memory and at least one processor. The processor is configured to execute instructions stored in the memory, so that the network device performs the possible implementations of the first aspect, the possible implementations of the second aspect, and the possible implementations of the fourth aspect.

According to a thirteenth aspect, an embodiment of this application provides a computer-readable storage medium, including computer program instructions. When the computer program instructions are executed by a network device, the network device performs the possible implementations of the first aspect, the possible implementations of the second aspect, or the possible implementations of the fourth aspect.

According to a fourteenth aspect, an embodiment of this application provides a computer program product including instructions. The computer program product stores the instructions, and when the instructions are executed by a network device, the network device implements the possible implementations of the first aspect, the possible implementations of the second aspect, or the possible implementations of the fourth aspect.

According to a fifteenth aspect, an embodiment of this application provides a communication apparatus. The communication apparatus includes a processor and a memory. The memory stores a computer program or computer instructions, and the processor is configured to invoke and run the computer program or the computer instructions stored in the memory, so that the processor implements the possible implementations of the first aspect, the possible implementations of the second aspect, the possible implementations of the third aspect, or the possible implementations of the fourth aspect.

In an implementation, the communication apparatus further includes a transceiver, and the processor is configured to control the transceiver to receive and send signals.

According to a sixteenth aspect, an embodiment of this application provides a communication apparatus. The communication apparatus includes a processor. The processor is configured to invoke a computer program or computer instructions stored in the storage, so that the processor implements the possible implementations of the first aspect, the possible implementations of the second aspect, the possible implementations of the third aspect, or the possible implementations of the fourth aspect.

In an implementation, the communication apparatus further includes a transceiver, and the processor is configured to control the transceiver to receive and send signals.

According to a seventeenth aspect, an embodiment of this application provides a chip apparatus, including a processor, and configured to invoke a computer program or computer instructions in a memory, so that the processor performs the possible implementations of the first aspect, the possible implementations of the second aspect, the possible implementations of the third aspect, or the possible implementations of the fourth aspect.

In an implementation, the processor is coupled to the memory via an interface.

According to an eighteenth aspect, an embodiment of this application provides a communication system. The communication system includes a core network and a network device. The core network is configured to perform the possible implementations of the first aspect or the possible implementations of the third aspect. The network device is configured to perform the possible implementations of the first aspect, the possible implementations of the second aspect, or the possible implementations of the fourth aspect.

### BRIEF DESCRIPTION OF DRAWINGS

FIG. 1 is a diagram of an application scenario of a wireless communication system according to an embodiment of this application;
FIG. 2 is a diagram of a structure of a service setup system according to an embodiment of this application;
FIG. 3 is a schematic flowchart of constructing a service context by a service setup system according to an embodiment of this application;
FIG. 4 is a diagram of switching between states of a target service supported by a service setup system according to an embodiment of this application;
FIG. 5 is a schematic flowchart of generating a service context by a network device according to an embodiment of this application;
FIG. 6 is a schematic flowchart of updating a service context by a network device according to an embodiment of this application;
FIG. 7 is a schematic flowchart of constructing a CSI compression feedback function by a terminal device, a network device, and a service setup system according to an embodiment of this application;
FIG. 8 is a diagram of a structure of a service setup apparatus according to an embodiment of this application;
FIG. 9 is a diagram of a structure of another service setup apparatus according to an embodiment of this application; and
FIG. 10 is a diagram of a structure of a base station according to an embodiment of this application.

### DESCRIPTION OF EMBODIMENTS

The following describes the technical solutions in embodiments of this application with reference to the accompanying drawings in embodiments of this application.

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are intended to distinguish between different objects, but do not indicate a particular order of the objects. For example, a first response instruction, a second response instruction, and the like are used to distinguish between different response instructions, but are not intended to describe a specific order of the response instructions.

In embodiments of this application, the word such as "example" or "for example" is used to represent giving an example, an illustration, or a description. Any embodiment or design scheme described as the word "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise specified, "a plurality of" means two or more. For example, a plurality of processing units are two or more processing units, and a plurality of elements are two or more elements.

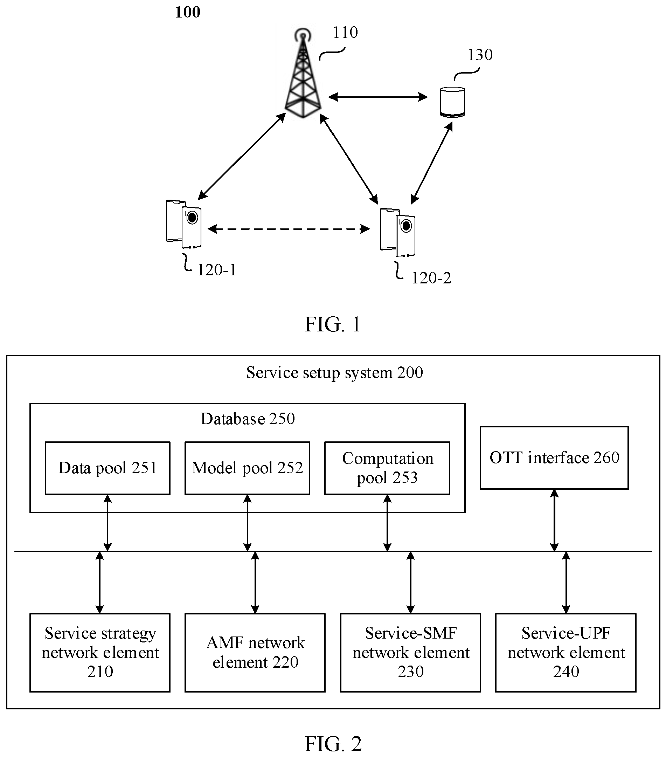

FIG. 1 is a diagram of an application scenario of a wireless communication system according to an embodiment of this application. As shown in FIG. 1, the wireless communication system 100 may include at least one network device 110, at least one terminal device 120, and at least one AI module 130. Quantities of network devices 110, terminal devices 120, and AI modules 130 are not limited to the quantities shown in FIG. 1, and may be any quantities.

The wireless communication system 100 may be a 5G system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a future mobile communication system after a 5G network (for example, a 6G mobile communication system), a vehicle to everything (vehicle to everything, V2X) communication system, a device to device (device to device, D2D) communication system, an internet of things communication system, an industrial internet communication system, a satellite communication system, or the like, and three application scenarios of a next-generation 5G mobile communication system: an enhanced mobile broadband (enhanced mobile broadband, eMBB) system, an ultra-reliable and low-latency communications (ultra-reliable and low-latency communication, URLLC) system, and a massive machine type communications (massive machine type communication, eMTC) system.

The wireless communication system 100 may be formed by cells (cells). Generally, at least one network device 110 is deployed in one cell, so that the network device 110 can provide a communication service for each terminal device 120 in the cell. The wireless communication system 100 may perform point-to-point communication, for example, enable a plurality of terminal devices 120 to communicate with each other.

The terminal device 120 may be a wireless terminal device that can receive scheduling information and indication information of the network device. The terminal device 120 may be a device that provides a user with voice and/or data connectivity, or a handheld device having a wireless connection function, or another processing device connected to a wireless modem.

The terminal device 120 is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing voice/data connectivity to a user), for example, a handheld device or an in-vehicle device having a wireless connection function. Currently, some examples of terminal devices are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control, a wireless terminal in the Internet of Vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self-driving may be an uncrewed aerial vehicle, a helicopter, or an airplane. For example, a wireless terminal in vehicle-to-everything may be a vehicle-mounted device, an entire vehicle device, a vehicle-mounted module, a vehicle, or a ship. The wireless terminal in the industrial control may be a camera, a robot, a robotic arm, or the like. The wireless terminal in the smart home may be a television, an air conditioner, a sweeper, a sound box, a set-top box, or the like.

It should be noted that the terminal device 120 may be a device or an apparatus with a chip, a device or an apparatus integrated with a circuit, or a chip, a chip system, a module, or a control unit in the foregoing device or apparatus. This is not specifically limited in this application. It should be noted that, in this application, reference to the terminal device 120 may mean the terminal device, or may mean a chip, a functional module, an integrated circuit, or the like that is in the terminal device and that completes the method provided in this application. This is not specifically limited in this application.

The network device 110 may be a device in a wireless network. For example, the network device 110 may be a device that is deployed in a radio access network and that provides a wireless communication function for the terminal device. For example, the network device 110 may be a radio access network (radio access network, RAN) node that enables the terminal device 120 to access the wireless network, and may also be referred to as an access network device, a RAN entity, an access node, a network node, a communication apparatus, or the like.

Specifically, the network device 110 may be an access network device in a cellular system related to the 3rd generation partnership project (3rd generation partnership project, 3GPP), for example, a 4G communication system or the 5G communication system. Alternatively, the network device 110 may be an access network device in an open access network (open RAN, O-RAN, or ORAN) or a cloud radio access network (cloud radio access network, CRAN). Alternatively, the network device 110 may be an access network device in a communication system obtained by integrating two or more of the foregoing communication systems. Alternatively, the network device 110 may be a satellite in a satellite communication system.

The network device 110 includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), a transmission and reception point (transmission and reception point, TRP), or the like; or may be a network device in a 5G mobile communication system, for example, a next generation NodeB (next generation NodeB, gNB), a TRP, or a TP in the NR system, or one antenna panel or one group of antenna panels (including a plurality of antenna panels) of a base station in the 5G mobile communication system. Alternatively, the network device 110 may be a network node that constitutes a gNB or a transmission point, for example, a central unit (central unit, CU), a distributed unit (distributed unit, DU), a central unit-control plane (central unit-control plane, CU-CP), a central unit-user plane (central unit-user plane, CU-UP), or a radio unit (radio unit, RU). The CU and the DU may be separately disposed, or may be included in a same network element, for example, a BBU. The RU may be included in a radio frequency device or a radio frequency unit, for example, a remote radio unit (remote radio unit, RRU), an active antenna unit (active antenna unit, AAU), or a remote radio head (remote radio head, RRH). Alternatively, the network device 110 may be a server, a wearable device, a vehicle, a vehicle-mounted device, or the like. For example, an access network device in a V2X technology may be a roadside unit (roadside unit, RSU).

It should be noted that in different systems, the CU (or the CU-CP and the CU-UP), the DU, or the RU may have different names, but a person skilled in the art may understand meanings of the names. For example, in an ORAN system, the CU may also be referred to as an open central unit (open central unit, O-CU) or an open CU, the DU may also be referred to as an open distributed unit (open distributed unit, O-DU), the CU-CP may also be referred to as an open central unit-control plane (open central unit control plane, O-CU-CP), the CU-UP may also be referred to as an open central unit-user plane (open central unit user plane, O-CU-UP), and the RU may also be referred to as an open radio unit (open radio unit, O-RU). This is not specifically limited in this application. Any unit in the CU, the CU-CP, the CU-UP, the DU, and the RU in this application may be implemented by using a software module, a hardware module, or a combination of the software module and the hardware module.

Optionally, for network elements in the ORAN system, each network element may implement a protocol layer function shown in the following Table 1.

**Table 1**

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), media access control (media access control or medium access control, MAC), and physical higher layer (PHY-high) |
| O-RU | Low physical layer (PHY-low) |

It should be noted that, in the ORAN system, the network device 110 in this application may be one or more network elements in Table 1 above.

The following describes architectures of the CU and the DU of the access network device. The access network device includes at least one CU and at least one DU. Optionally, the access network device further includes at least one RU.

The following provides descriptions by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer above the PDCP layer (for example, an RRC layer and/or an SDAP layer). The DU is configured to implement a function of a protocol layer below the PDCP layer (for example, an RLC layer, a MAC layer, and/or a physical (physical, PHY) layer). For another example, the CU is configured to implement functions of protocol layers (for example, an RRC layer and/or an SDAP layer) above a PDCP layer; and the DU is configured to implement functions of the PDCP layer and protocol layers (for example, an RLC layer, a MAC layer, and/or a PHY layer) below the PDCP layer.

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may interact with a network element configured to implement a control plane function in the core network. The network element for implementing the control plane function in the core network may be an access and mobility function network element, for example, an access and mobility function (access and mobility management function, AMF) in a 5G system. The access and mobility function network element is configured to be responsible for mobility management in a mobile network, for example, position update of a terminal device, network registration of the terminal device, and handover of the terminal device.

The CU-UP may interact with a network element configured to implement a user plane function in the core network. The network element that is in the core network and that is configured to implement the user plane function, for example, a user plane function (user plane function, UPF) in the 5G system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have some processing functions of a protocol layer. For example, some functions of the RLC layer and functions of a protocol layer above the RLC layer are set on the CU, and remaining functions of the RLC layer and functions of a protocol layer below the RLC layer are set on the DU. For another example, division into functions of the CU or the DU may alternatively be performed based on service types or other system requirements. For example, division is performed based on latency. Functions whose processing time needs to meet a small latency requirement are set in the DU, and functions whose processing time does not need to meet the latency requirement are set in the CU.

The DU and the RU may cooperate to jointly implement functions of the PHY layer. One DU may be connected to one or more RUs. Functions of the DU and the RU may be configured in a plurality of manners based on a design. For example, the DU is configured to implement a baseband function, and the RU is configured to implement intermediate frequency and radio frequency functions. For another example, the DU is configured to implement a higher layer function of the PHY layer, and the RU is configured to: implement a lower layer function of the PHY layer, or implement the lower layer function and a radio frequency function. The higher layer function of the physical layer may include some functions of the physical layer, and the some functions are closer to the MAC layer. The lower layer function of the physical layer may include some other functions of the physical layer, and the some other functions are closer to an intermediate radio frequency side.

The network device 110 may alternatively be a core network device. For example, the network device 110 is a control-plane functional entity, including an access and mobility management function (access and mobility management function, AMF) or a session management function (session management function, SMF). The AMF is responsible for user access management, security authentication, mobility management, and the like. The data-plane functional entity includes a UPF. The UPF is responsible for managing functions such as user plane data transmission and traffic statistics collection.

It should be noted that the network device 110 may be a device or an apparatus with a chip, a device or an apparatus integrated with a circuit, or a chip, a chip system, a module, or a control unit in the foregoing device or apparatus. This is not specifically limited in this application. It should be noted that, in this application, reference to the network device 110 may mean the network device 110, or may mean a chip, a functional module, an integrated circuit, or the like that is in the network device 110 and that completes the method provided in this application. This is not specifically limited in this application.

The AI module 130 is a device that runs an AI model to perform functions such as data collection, data processing, and model training. The AI module 130 may be a component of the network device 110, in which case the AI model is deployed on the network device 110. The AI module 130 may be a component of the terminal device 120, in which case the AI model is deployed on the terminal device 120. The AI module 130 may be an independent component, for example, a network element of a core network, and the component has a wireless communication function, so that the AI module 130 can separately communicate with the network device 110 and the terminal device 120. The AI model is a machine learning model applied to the field of artificial intelligence, and can automatically learn and adapt to patterns and regularities of different data sets. The AI model can be trained on a large amount of data to learn features and relationships, and may be used to solve various intelligent tasks. The AI model may be applied to a plurality of fields and tasks such as natural language processing, computer vision, speech recognition, and intelligent recommendation. A common AI model may be a neural network model (for example, a deep neural network and a recurrent neural network), a support vector machine model, a decision tree model, or the like. In embodiments of this application, the AI module 130 may perform functions such as data collection, data processing, and model training, so that the device to which the AI module 130 belongs has all or some AI functions.

In embodiments of this application, when the network device 110 does not have an AI service required by the terminal device 120, the network device 110 may maintain, through the core network, related resources of one or more network elements supporting the AI service (or an AI function). The core network constructs the AI service for the network device 110, so that the network device 110 can provide the AI service for the terminal device 120. The core network is an important part of a mobile communication network, and is configured to: process and manage user data, signaling, and control information in the mobile network. The core network generally includes a plurality of network elements, and depends on each network element to implement data processing, forwarding, and control.

A service setup system provided in this application is run by the core network. The service setup system may maintain a related resource of a related network element in the core network, to construct a specified target service. The target service may be the foregoing AI service, or may be another type of service. The service setup system may maintain related resources of one or more network elements of the target service, so that the network device 110 and the service setup system can jointly provide the target service for the terminal device 120. The target service may be a service like channel state information (channel state information, CSI) compression feedback, cell reselection, or cell selection.

For ease of description, in this application, related resources that are of one or more network elements and that need to be maintained by the service setup system to support one or more target services may be referred to as a "service context (service context)".

FIG. 2 is a diagram of an application scenario of a service setup system according to an embodiment of this application. As shown in FIG. 2, the service setup system 200 may include a service strategy (service strategy) network element 210, an AMF network element 220, a service-session management function (Service-session management function, Service-SMF) network element 230, a service-user plane function (Service-user plane function, Service-UPF) network element 240, a database 250, and an over-the-top interface (over-the-top interface, OTT interface) 260.

Specific physical hardware of each network element in the service setup system 200 may be the network device 110, or may be physical hardware of the terminal device 120, or another type of physical hardware. Optionally, the service setup system 200 may be the foregoing core network device. In this case, the service strategy network element 210, the AMF network element 220, and the Service-SMF network element 230 may be functional entities on a control plane of the core network device. The Service-UPF network element 240 and the database 250 are functional entities on a data plane of the core network device.

The service strategy network element 210 is configured to make a decision for a target service, and may be used as an anchor node (or an anchor network element) of the target service. The service strategy network element 210 may provide support for obtaining a service context for a target service in an inactive (inactive) state. In embodiments of this application, the service strategy network element 210 may provide a decision-making function for an AI service. A service strategy generally includes parameters related to maintaining the AI service, such as an AI service identifier, a service context identifier of the AI service, an identifier of a node participating in the AI service, a node access address, an area description of the AI service, and a quality description of the AI service.

The AMF network element 220 is configured to control connection and mobility management between a core network and the terminal device 120. In embodiments of this application, the AMF network element 220 may be used as a bridge between the terminal device 120 and the service setup system 200, to transmit data between the terminal device 120 and each network element in the service setup system 200.

The Service-SMF network element 230 is configured to manage sessions related to the target service, for example, establish and maintain traffic channels for traffic transmission between network elements related to the target service, such as data and a model, and maintain channel parameters (for example, an allocated IP address or a channel address). In embodiments of this application, the Service-SMF network element 230 may manage sessions related to the AI service, to establish and maintain traffic channels for traffic transmission between network elements related to the AI service, and maintain an allocated IP (Internet Protocol) address, a channel address, and the like of the traffic channels.

The Service-UPF network element 240 is configured to provide user plane transmission for the target service. In embodiments of this application, the Service-UPF network element 240 may provide user plane transmission for the AI service.

The database 250 may include a data pool (data pool) 251, a model pool (model pool) 252, and a computation pool (computation pool) 253. The data pool 251, the model pool 252, and the computation pool 253 may be located on one network element or on another quantity of network elements.

The data pool 251 is configured to maintain data such as a dataset, an intermediate result of training/inference, and a corresponding identifier. In embodiments of this application, the data pool 251 may be configured to maintain data such as a dataset, an intermediate result of training/inference of an AI model, and a service context identifier.

The model pool 252 is configured to maintain model parameters and corresponding identifiers. In embodiments of this application, the model pool 252 may maintain AI model parameters of the AI service, an identifier of the AI model, and the like.

The computation pool 253 is configured to: schedule a compute resource of each node in a network, support a service function, and maintain the compute resource and a corresponding identifier. In embodiments of this application, the computation pool 253 may schedule a compute resource of each network element in the service setup system 200, support the AI service, maintain a compute resource of the AI service, and maintain an identifier of each resource.

The OTT interface 260 is configured to: provide an interface for third-party data, models, and the like, and maintain an interface address, a description of network access traffic, and the like.

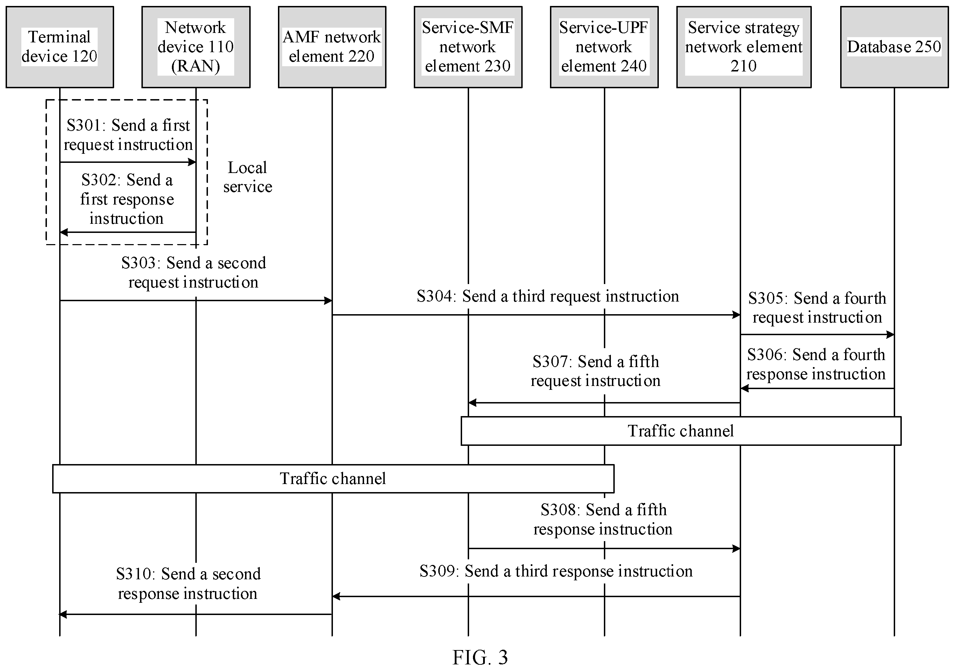

For example, FIG. 3 is a schematic flowchart of constructing a service context by a service setup system according to an embodiment of this application. It may be understood that a service context of a target service may be implemented by the network device 110, the terminal device 120, and the service setup system 200. Network elements involved in the service setup system 200 may include the service strategy network element 210, the AMF network element 220, the Service-SMF network element 230, the Service-UPF network element 240, and the database 250. A specific process in which the service setup system 200 constructs the service context of the target service is described below.

Step S301: The terminal device 120 sends a first request instruction to the network device 110. The first request instruction is a service request instruction, and is used to request a target service supported by the network device 110.

Step S302: The network device 110 sends a first response instruction to the terminal device 120. The first response instruction is an instruction in response to the first request instruction, and is used to notify the terminal device 120 that the network device 110 supports the target service, or notify the terminal device 120 that the network device 110 does not support the target service.

Optionally, in an ORAN system, the network device 110 in Step S301 and Step S302 may be the O-CU-CP network element, the O-DU network element, and/or the O-RU network element shown in Table 1.

When the terminal device 120 needs to execute the target service, the terminal device 120 may send the first request instruction to the network device 110, to request the target service supported by the network device 110. After receiving the first request instruction, the network device 110 may determine, based on a service context identifier carried in the first request instruction, whether the target service is supported locally. In one case, if the network device 110 supports the target service, the network device 110 may send the first response instruction to the terminal device 120, to notify the terminal device 120 that the network device 110 supports the target service. In another case, if the network device 110 does not support the target service, the network device 110 may send the first response instruction to the terminal device 120, to notify the terminal device 120 that the network device 110 does not support the target service.

Step S303: The terminal device 120 sends a second request instruction to the AMF network element 220. The second request instruction is a service request instruction, and is used to request a target service supported by a core network. In this embodiment, the second request instruction is used to request the target service supported by the service setup system 200.

Step S304: The AMF network element 220 sends a third request instruction to the service strategy network element 210. The third request instruction is a service strategy request instruction, and is used to request the core network to generate a service strategy of the target service. In this embodiment, the third request instruction is used to request the service strategy network element 210 to generate the service strategy of the target service.

Optionally, in Step S303, when the terminal device 120 sends the third request instruction to the AMF network element 220 by using the network device 110, the network device 110 may be a RAN.

When determining that the network device 110 does not support the target service, the terminal device 120 may send the second request instruction to the AMF network element 220 by using the network device 110. After receiving the second request instruction, the AMF network element 220 generates the third request instruction, and sends the third request instruction to the service strategy network element 210.

Step S305: The service strategy network element 210 sends a fourth request instruction to the database 250. The fourth request instruction is used as a service configuration request instruction, and is used to request the core network to provide a related resource of each network element. In this embodiment, the fourth request instruction is used to request the database 250 in the service setup system 220 to provide the data pool 251, the model pool 252, and the computation pool 253.

Step S306: The database 250 sends a fourth response instruction to the service strategy network element 210. The fourth response instruction is an instruction in response to the fourth request instruction, and is used to notify the core network to complete providing of the related resource of each network element. In this embodiment, the fourth response instruction is used to notify the service strategy network element 210 that the database 250 configures the data pool 251, the model pool 252, and the computation pool 253.

The service strategy network element 210 is a control center of the service setup system 200. After receiving the third request instruction, the service strategy network element 210 may generate the service strategy of the target service based on the third request instruction. After obtaining the service strategy of the target service, the service strategy network element 210 may configure the related resource of each network element in the service setup system 200, to support the target service. In a configuration process, the service strategy network element 210 may send the fourth request instruction to the database 250, to request the database 250 to provide the data pool 251, the model pool 252, and the computation pool 253 that support the target service. After receiving the fourth request instruction, the database 251 may create the data pool 251, the model pool 252, and the computation pool 253, and enable the data pool 251 to be used to maintain data such as a dataset, an intermediate result of model training/inference, and a service context identifier, enable the model pool 252 to maintain a model parameter, a model identifier, and the like of the target service, and enable the computation pool 253 to schedule a compute resource of each network element in the service setup system 200, a compute resource used to support the target service and maintain the target service, and an identifier of each resource. After completing creation of the data pool 251, the model pool 252, and the computation pool 253, the database 250 sends the fourth response instruction to the service strategy network element 210, to notify the service strategy network element 210 that the database 250 configures the data pool 251, the model pool 252, and the computation pool 253.

Step S307: The service strategy network element 210 sends a fifth request instruction to the Service-SMF network element 230. The fifth request instruction is a request instruction for creating a traffic channel, and is used to request the core network to establish a traffic channel for the related resource of each network element. In this embodiment, the fifth request instruction is used to request the Service-SMF network element 230 in the service setup system 220 to establish traffic channels between a local end, the terminal device 120, the service strategy network element 210, the AMF network element 220, the data pool 251, the model pool 252, and the computation pool 253 on the Service-UPF network element 240

Step S308: The Service-SMF network element 230 sends a fifth response instruction to the service strategy network element 210. The fifth response instruction is an instruction in response to the fifth request instruction, and is used to notify the core network to complete establishment of the traffic channel for the related resource of each network element. In this embodiment, the fifth response instruction is used to notify the service strategy network element 210 that the Service-SMF network element 230 completes establishment of the traffic channel for the related resource of each network element.

After creating the data pool 251, the model pool 252, and the computation pool 253, the service strategy network element 210 may send the fifth request instruction to the Service-SMF network element 230, to request the Service-SMF network element 230 to manage a related session of the target service. The Service-SMF network element 230 may establish a traffic channel for a network element that needs to perform traffic interaction, that is, establish traffic channels between the network device 110, the AMF network element 220, the Service-SMF network element 230, the service strategy network element 210, the data pool 251, the model pool 252, and the computation pool 253, so that the network device 110, the AMF network element 220, the Service-SMF network element 230, the service strategy network element 210, the data pool 251, the model pool 252, and the computation pool 253 can transmit traffic to each other. The Service-SMF network element 230 may further establish a traffic channel between the terminal device 120 and the Service-UPF network element 240, so that the terminal device 120 and the Service-UPF network element 240 can transmit traffic to each other, and the terminal device 120 can access another network element in the service setup system 200 through the Service-UPF network element 240, and transmit traffic.

The Service-UPF network element 240 is a network element that forwards traffic. Therefore, traffic channels between the network device 110, the terminal device 120, the data pool 251, the model pool 252, and the computation pool 253 are all established on the Service-UPF network element 240. The Service-UPF network element 240 may forward traffic of a network element at one end of a traffic channel to a network element at the other end of the traffic channel, so that the two network elements can communicate with each other.

After completing establishment of the traffic channel between the network elements, the Service-SMF network element 230 may send a service session response instruction to the service strategy network element 210, to request the Service-SMF network element 230 to complete establishment of the traffic channel between the network elements. After receiving the service session response instruction, the service strategy network element 210 determines that configuration of the related resource of each network element for executing the target service is completed. The service strategy network element 210 may generate the service context of the target service based on the related resource of each network element for executing the target service, and store the service context in a local memory.

Step S309: The service strategy network element 210 sends a third response instruction to the AMF network element 220. The third response instruction is an instruction in response to the third request instruction, and is used to notify the core network to complete generation of the service context of the target service. In this embodiment, the third response instruction is used to notify the AMF network element 220 that the service strategy network element 210 completes generation of the service context of the target service.

Step S310: The AMF network element 220 sends a second response instruction to the terminal device 120. The second response instruction is an instruction in response to the second request instruction, and is used to notify the terminal device 120 that the service setup system 200 supports the target service.

After completing generation of the service context of the target service, the service strategy network element 210 may send the third response instruction to the AMF network element 220, to notify the AMF network element 220 that the service strategy network element 210 completes generation of the service context of the target service. After receiving the third response instruction, the AMF network element 220 may convert the third response instruction into the second response instruction, to notify the terminal device 120 that the service setup system 200 supports the target service. After receiving the second response instruction by using the network device 110, the terminal device 120 determines that the service setup system 200 has generated the service context of the target service, and may execute the target service in the service setup system 200 by using the network device 110. If the terminal device 120 needs to execute the target service, the terminal device 120 may send a sixth request instruction to the service setup system 200 by using the network device 110. The sixth request instruction is used to request the service setup system 200 to execute the target service, so that the service setup system 200 provides the target service for the terminal device 120.

In this embodiment of this application, when the network device 110 does not support the target service, the terminal device 120 may generate the service context of the target service by using the service setup system 200, so that the network device 120 can implement the target service by using the service setup system 200, thereby ensuring continuity of running the target service.

A status of the target service supported by the service strategy network element 210 may include a service setup (service setup) state, an inactive state, an active (active) state, and a service release (service release) state. The service setup state is a state in which the service strategy network element 210 coordinates startup parameters of each network element for starting the target service. The startup parameters may be a model scale, a model input/output, service performance, or the like. When the service strategy network element 210 is in the service setup state, each network element has not yet generated a service context used to implement the target service.

The inactive state means that the service strategy network element 210 sets the related resource of each network element for executing the target service to be in a sleep state. In this case, the service strategy network element 210 may determine that each network element generates a service context based on the startup parameter, and stores the service context in the local memory. When the service strategy network element 210 is in the inactive state, each network element does not provide the target service for the terminal device 120, and each network element can update the service context. The service setup system 200 buffers the service context in two manners.

The service strategy network element 210 may centrally store, in the local memory, the service context of each network element supporting the target service, so that each network element does not need to buffer the service context. When the target service enters the active state, the service strategy network element 210 may distribute the stored service context to each network element, so that each network element loads and runs the service context.

The service strategy network element 210 may indicate each network element supporting the target service to buffer the service context locally, so that the service context is stored in each network element in a distributed manner. When the target service enters the active state, the service strategy network element 210 may indicate each network element to load and run the target service.

The active state is a state in which the service strategy network element 210 starts the target service based on the service context. In this case, the service strategy network element 210 may enable the terminal device 120 to execute the target service, and enable each network element to update the service context.

The service release state is a state in which the service strategy network element 210 enables each network element to deregister the service context of the target service.

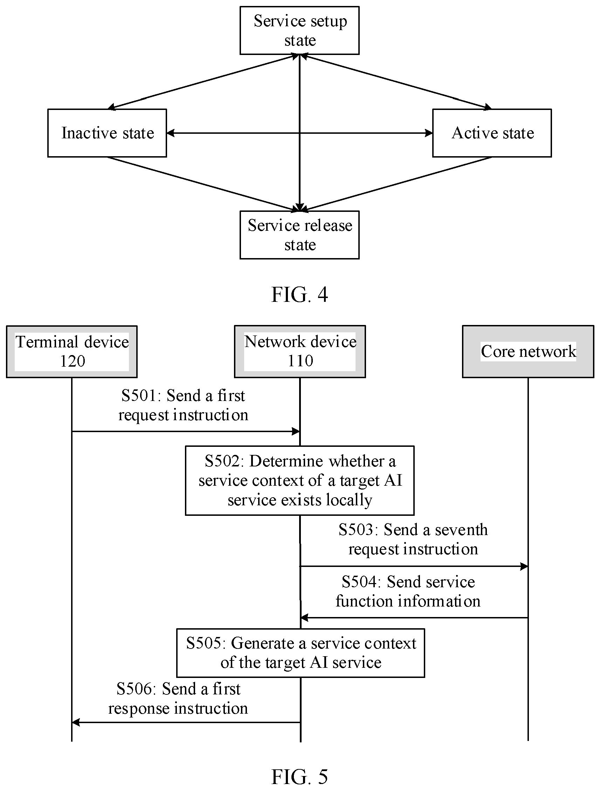

The service strategy network element 210 supports mutual conversion between the states of the target service. As shown in FIG. 4, the service setup state and the inactive state of the service strategy network element 210 may be mutually converted, the service setup state and the active state of the service strategy network element 210 may be mutually converted, the inactive state and the active state of the service strategy network element 210 may be mutually converted, the service setup state of the service strategy network element 210 may be switched to the service release state, the inactive state of the service strategy network element 210 may be switched to the service release state, and the active state of the service strategy network element 210 may be switched to the service release state.

In this embodiment of this application, when determining that the network device 110 does not support the target service, the terminal device 120 may construct, by using the network device 110, a service context supporting the target service. After receiving the first request instruction, the network device 110 first performs parameter alignment between the network device 110 and each network element of the core network, to ensure normal running and coordinated operation of the network device 110 and each network element of the core network.

FIG. 5 is a schematic flowchart of generating a service context by a network device according to an embodiment of this application. As shown in FIG. 5, the network device 110 generally works cooperatively with the terminal device 120 and a core network to generate a service context. A specific implementation process is as follows.

Step S501: The terminal device 120 sends a first request instruction to the network device 110. The first request instruction is a service request instruction, and is used to request a target service supported by the network device 110.

Step S502: The network device 110 detects whether a service context of the target service exists locally. In one case, the network device 110 determines that the service context of the target service does not exist locally, and performs Step S503. In another case, the network device 110 determines that the service context of the target service exists locally, and performs Step S506.

After receiving the first request instruction sent by the terminal device 120, the network device 110 may detect, based on a service context identifier carried in the first request instruction, whether a service context corresponding to the service context identifier exists locally. In one case, when determining that the service context corresponding to the service context identifier exists locally, the network device 110 may determine the service context of the target service. In another case, when determining that a service context corresponding to the service context identifier does not exist locally or a service context corresponding to the service context identifier is in complete locally, the network device 110 may forward the first request instruction to the core network, or send a seventh request instruction to the core network, to request to obtain service function information, provided by the core network, of each network element supporting the target service.

Step S503: The network device 110 sends the first request instruction or the seventh request instruction to the core network. The seventh request instruction is a request instruction for obtaining the service function information, and is used to request the core network to provide the service function information supporting the target service.

Step S504: The core network sends the service function information to the network device 110.

If the network device 110 receives the first request instruction, the network device 110 may transparently transmit the first request instruction to the core network. If the network device 110 receives the seventh request instruction, the network device 110 may send the seventh request instruction to the core network through a RAN. In the core network, the first request instruction and the seventh request instruction have a same function of obtaining the service function information of the target service. The core network may be the foregoing service setup system 200. The service setup system 200 may forward the first request instruction or the seventh request instruction to the service strategy network element 210. The service strategy network element 210 may determine the service function information of each network element based on the service context identifier carried in the first request instruction or the seventh request instruction, and send the service function information to the network device 110. The service function information includes a service type and/or a function type that each network element supporting the target service is capable of providing. The service type may be a service type such as training, inference, or data collection. The function type may be an enabling feature of the target service such as channel estimation, beam management, or mobility management.

Step S505: The network device 110 generates all or a part of the service context of the target service based on the service function information.

Step S506: The network device 110 sends a first response instruction to the terminal device 120. The first response instruction is an instruction in response to the first request instruction, and is used to notify the terminal device 120 that the network device 110 supports the target service.

After obtaining the service type and the function type that each network element of the core network is capable of providing, the network device 110 may locally configure a service parameter of the target service, for example, a model configuration, a dataset configuration, a compute resource, a parameter version number, and running environment information. The network device 110 may generate all or a part of the service context of the target service based on the service parameter of the target service and the service context identifier carried in the first request instruction, and set the status of the service context of the target service to the inactive state. If the service context generated by the network device 110 is the part of the service context of the target service, the part of the service context of the target service is a related resource involved in the network device 110 supporting the target service.

After generating the service context of the target service, the network device 110 may send the first response instruction to the terminal device 120. After receiving the first response instruction, the terminal device 120 determines that the network device 110 has generated the service context of the target service, and may execute the target service in the network device 110 and/or the core network. If the terminal device 120 needs to execute the target service, the terminal device 120 may send an eighth request instruction to the core network by using the network device 110. The eighth request instruction is used to request the network device 110 and/or the core network to execute the target service, so that the network device 110 provides the target service for the terminal device 120. In this case, the network device 110 sets the service context of the target service to be in the active state.

After setting up the supported target service, the network device 110 may broadcast or multicast a system message. The system message indicates the target service supported by the network device 110. The system message includes related configuration information of the target service. The configuration information may include an identity (identity, ID) of the target service, a mapping configuration of a logical transmission channel (logical traffic channel, LTCH) for carrying service traffic of the target service and a physical downlink shared channel (physical downlink shared channel, PDSCH) and/or a physical uplink shared channel (physical uplink shared channel, PUSCH), and configuration information of each protocol layer.

After receiving the system message, the terminal device 120 may determine, based on a local requirement, whether the target service of the network device 110 is required. If the terminal device 120 requires the target service of the network device 110, the terminal device 120 may send interest information to the network 110, to notify the network device 110 that the terminal device 120 requires the target service of the network device 110. After receiving the interest information, the network device 110 may know whether the terminal device 120 requires the target service, to identify a model and/or function corresponding to the target service, and set the target service to be in the active state, so that the terminal device 120 can execute the target service by using the network device 110.

Optionally, in an ORAN system, the network device 110 in Step S501 to Step S506 may be the O-CU-CP network element, the O-DU network element, and/or the O-RU network element shown in Table 1.

In this embodiment of this application, one area identifier may be added to the service context constructed with participation of the network device 110. The area identifier is used to distinguish a geographical area in which the service context takes effect, and may be an ID of the network device 110, an address of an area in which the network device 110 is located, or another identifier for distinguishing the network device 110. The network device 110 may locally construct a dedicated service context based on the area identifier and the service context identifier. The terminal device 120 generally carries the service context identifier (namely, a service context ID) of the target service that needs to be executed. After being handed over from one network device 110 to another network device 110, the terminal device 120 sends the service context identifier to the network device 110 after switching. After receiving the service context identifier, the network device 110 determines a service context corresponding to the service context identifier, and determines whether an area identifier in the service context corresponding to the service context identifier is the same as the local area identifier. If the network device 110 determines that the area identifier in the service context corresponding to the service context identifier is different from the local area identifier, the service context locally providing the target service changes. The network device 110 finds that the area identifier changes, and determines that the locally known service context is not suitable for providing the target service for a new terminal device 120.

After determining that the service context for providing the target service for the terminal device 120 changes, the network device 110 may send a ninth request instruction to the terminal device 120. The ninth request instruction is used to request the terminal device 120 to determine whether the network device 110 generates a service context of the target service again. After receiving the ninth request instruction, the terminal device 120 may re-send the first request instruction, the second request instruction, or another request instruction to the network device 110 after switching, to request the network device 110 after switching to generate a service context of the target service again, or request, in another manner, the network device 110 after switching to generate a service context of the target service again, so that the terminal device 120 can execute the target service by using the network device 110 after switching. Alternatively, the terminal device 120 sends a pause instruction to the network device 110 after switching, to instruct the network device 110 after switching to suspend maintenance of the service context, and instruct the terminal device 120 to stop executing the target service.

When switching from one network device 110 to another network device 110, the terminal device 120 may send the service context identifier to the network device 110 after switching. After receiving the service context identifier, the network device 110 after switching determines whether a service context corresponding to the service context identifier exists locally. In one case, if the network device 110 after switching has the corresponding service context, the terminal device 120 may be added to a service session for maintenance of the local service context. In another case, if the network device 110 after switching does not have the corresponding service context, the corresponding service context identifier may be broadcast or multicast to another network device 110, to find a network device 110 that has the corresponding service context. After finding the network device 110 that has the corresponding service context, the network device 110 after switching may obtain the corresponding service context from the another network device 110, and set a status of the corresponding service context to the active state. The network device 110 after switching may add the terminal device 120 to a service session for maintenance of the local service context, so that the terminal device 120 can execute the target service by using the network device 110 after switching.

The network device 110 after switching may configure a unicast link for the terminal device 120 or add the terminal device 120 to an existing multicast or broadcast link based on a local resource status, to configure an air interface resource for the terminal device 120 to carry traffic of a transmission service. In a process in which the terminal device 120 switches from one network device 110 to another network device 110, the terminal device 120 may obtain a service context from a network based on the service context identifier, to ensure continuity of running the target service by the terminal device 120.

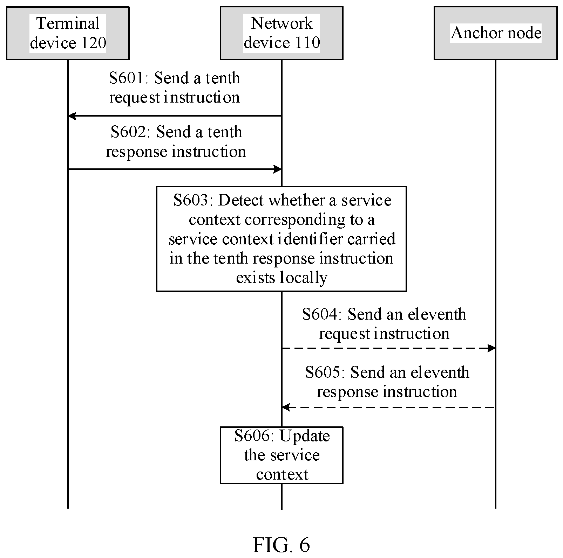

FIG. 6 is a schematic flowchart of updating a service context by a network device according to an embodiment of this application. As shown in FIG. 6, a process in which the network device 110 updates the service context is specifically as follows.

Step S601: The network device 110 sends a tenth request instruction to the terminal device 120. The tenth request instruction is a service query request instruction, and is used to request to query for a service context in the terminal device 120.

Step S602: The terminal device 120 sends a tenth response instruction to the network device 110. The tenth response instruction is an instruction in response to the tenth request instruction, and is used to provide an identifier of a service context that needs to be updated by the terminal device 120. The tenth response instruction includes the identifier of the service context that needs to be updated by the terminal device 120.

After the network device 110 needs to update the locally maintained service context, the network device 110 may enable a service context update function, and send the tenth request instruction to the terminal device 120, to request to query for the service context in the terminal device 120. After receiving the tenth request instruction, the terminal device 120 may send the tenth response instruction to the network device 110 based on the service context that needs to be updated. The tenth response instruction carries the identifier of the service context that needs to be updated by the terminal device 120, so that after obtaining the tenth response instruction, the network device 110 can obtain the service context that needs to be updated by the terminal device 120. The tenth response instruction further carries status information of the target service, so that after updating the service context, the network device sets an updated service context to be in a corresponding state based on the status information.

Step S603: The network device 110 detects whether a service context corresponding to the service context identifier carried in the tenth response instruction exists locally. In one case, the network device 110 determines that the service context corresponding to the service context identifier carried in the tenth response instruction exists locally, and performs Step S606. In another case, the network device 110 determines that the service context corresponding to the service context identifier carried in the tenth response instruction does not exist locally, and performs Step S604.

Step S604: The network device 110 sends an eleventh request instruction to an anchor node. The anchor node is a network device 110 that can construct a service context corresponding to a service context identifier. The eleventh request instruction is used to request another network device to provide a service context corresponding to the service context identifier carried in the tenth response instruction.

Step S605: The anchor node sends an eleventh response instruction to the network device 110. The eleventh response instruction is an instruction in response to the eleventh request instruction, and is used to provide the service context corresponding to the service context identifier carried in the tenth response instruction. The eleventh response instruction includes the service context corresponding to the service context identifier carried in the tenth response instruction.

After receiving the tenth response instruction, the network device 110 may detect, based on the service context identifier carried in the tenth response instruction, whether a corresponding service context exists locally. In one case, when determining that the service context corresponding to the service context identifier carried in the tenth response instruction exists locally, the network device 110 may maintain the service context corresponding to the service context identifier. In another case, when determining that the service context corresponding to the service context identifier carried in the tenth response instruction does not exist locally or a complete service context corresponding to the service context identifier carried in the tenth response instruction does not exist locally, the network device 110 may broadcast the eleventh request instruction to another network device 110, to request another network device 110 to provide a service context corresponding to the service context identifier carried in the tenth response instruction. The eleventh request instruction carries the service context identifier carried in the tenth response instruction, so that the another network device 110 can provide the corresponding service context.

After determining, based on the service context identifier carried in the tenth response instruction, that the service context corresponding to the service context exists locally, the another network device 110 may send an eleventh response instruction to the network device 110, and send the service context corresponding to the service context identifier carried in the tenth response instruction to the network device 110.

Step S606: The network device 110 updates the service context.

After obtaining the service context corresponding to the service context identifier carried in the tenth response instruction, the network device 110 may maintain the corresponding service context, and set the status of the service context to the state indicated by the status information carried in the tenth response instruction, to update the service context.

Optionally, in an ORAN system, the network device 110 in Step S601 to Step S605 may be the O-CU-CP network element, the O-DU network element, and/or the O-RU network element shown in Table 1.

The following uses CSI compression feedback as an example to describe an implementation scenario of the solutions in embodiments of this application.

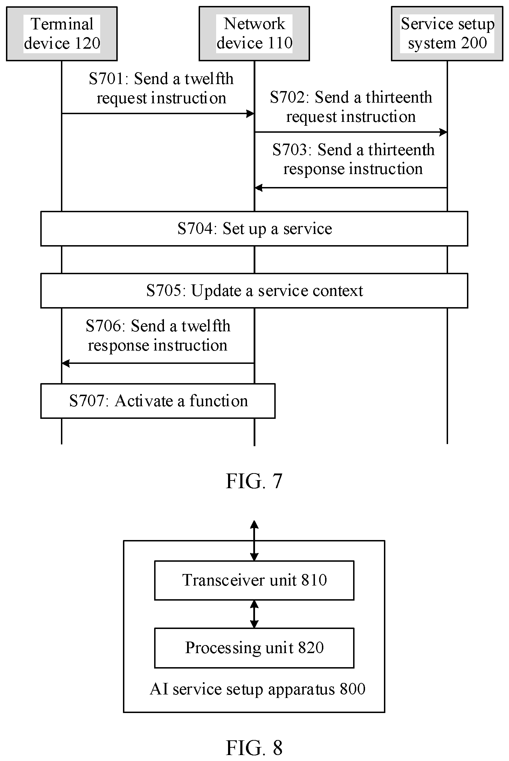

FIG. 7 is a schematic flowchart of constructing a CSI compression feedback function by a terminal device, a network device, and a service setup system according to an embodiment of this application. As shown in FIG. 7, a process in which the terminal device 120, the network device 110, and the service setup system 200 construct a CSI compression feedback function is specifically as follows.

Step S701: The terminal device 120 sends a twelfth request instruction to the network device 110. A function of the twelfth request instruction may be similar to a function of the first request instruction, and is used to request a CSI compression feedback function supported by the network device 110.

CSI compression feedback means that in a wireless communication system, CSI information is compressed by using a specific method, to reduce resource overheads required for CSI feedback. When the terminal device 120 requires the CSI compression feedback function, the terminal device 120 may send the twelfth request instruction to the network device 110, to request the network device 110 to maintain a service context of the CSI compression feedback function.

Step S702: The network device 110 sends a thirteenth request instruction to the service setup system 200. A function of the thirteenth request instruction may be similar to a function of the seventh request instruction, and is used to request to obtain service function information provided by the service setup system 200 supporting the CSI compression feedback function.

Step S703: The service setup system 200 sends a thirteenth response instruction to the network device 110. A function of the thirteenth request instruction may be similar to a function of the service function information, and the service function information carries the service function information of the supported CSI compression feedback function.

Similarly, for a specific implementation process of Step S701 to Step S703, refer to the process of Step S501 to Step S504 in FIG. 5. Specifically, after receiving the twelfth request instruction, the network device 110 first detects whether the service context of the CSI compression feedback function exists locally. In one case, the network device 110 determines that the service context of the CSI compression feedback function exists locally, and Step S702 and Step S703 do not need to be performed. In another case, the network device 110 determines that the service context of the CSI compression feedback function does not exist locally, and may send the thirteenth request instruction to the service setup system 200, to obtain the service function information of the CSI compression feedback function supported by the service setup system 200. After obtaining the thirteenth request instruction, the service setup system 200 determines, based on a service context identifier of the CSI compression feedback function carried in the thirteenth request instruction, service function information of each network element supporting the CSI compression feedback function, and sends the service function information to the network device 110.

Step S704: The network device 110 generates a CSI compression feedback function.

Step S705: The network device 110 updates a local service context.

After obtaining the service function information of the service setup system 200, the network device 110 may locally configure a service parameter of the CSI compression feedback function. The network device 110 may generate all or a part of the service context of the CSI compression feedback function based on the service parameter of the CSI compression feedback function and the service context identifier of the CSI compression feedback function carried in the twelfth request instruction, and maintain the service context of the CSI compression feedback function, so that the network device 110 supports the CSI compression feedback function. In this case, the network device 110 may set the service context of the CSI compression feedback function to be in an inactive state.

Step S706: The network device 110 sends a twelfth response instruction to the terminal device 120. A function of the twelfth response instruction may be similar to a function of the first response instruction, and is used to notify the terminal device 120 that the network device 110 supports the CSI compression feedback function.

After obtaining the service context of the CSI compression feedback function, the network device 110 may maintain the service context of the CSI compression feedback function, and perform the CSI compression feedback function, to ensure continuity of running the CSI compression feedback function by the terminal device 120. After the network device 110 has the CSI compression feedback function, the network device 110 may send the twelfth response instruction to the terminal device 120, to notify the terminal device 120 that the current network device 110 has the CSI compression feedback function.

Step S707: The network device 110 activates the CSI compression feedback function.

After determining that the network device 110 has the CSI compression feedback function, the terminal device 120 may send an execution instruction to the network device, so that the CSI compression feedback function is implemented by using the network device 120 and/or the service setup system 200. In this case, the network device 110 may set the service context of the CSI compression feedback function to be in an active state, so that the CSI compression feedback function is run normally.

Optionally, in an ORAN system, the network device 110 in Step S701 to Step S707 may be the O-CU-CP network element, the O-DU network element, and/or the O-RU network element shown in Table 1.

In another embodiment, a function of the twelfth request instruction may be similar to a function of the second request instruction, and the twelfth request instruction is used to request the service setup system 200 to support the CSI compression feedback function. In this case, the network device 110 forwards only the twelfth request instruction, that is, the thirteenth request instruction and the twelfth request instruction are one request instruction.

After receiving the thirteenth request instruction, the service setup system 200 may generate a service context supporting the CSI compression feedback function. For a specific implementation process, refer to the process of Step S305 to Step S309 in FIG. 3. Specifically, for example, the service setup system 200 may include the service strategy network element 210, the AMF network element 220, the Service-SMF network element 230, the Service-UPF network element 240, and the database 250. The service strategy network element 210 generates a service strategy of the CSI compression feedback function based on the service context identifier carried in the third request instruction. The service strategy network element 210 may send a fourth request instruction to the database 250, to request the database to provide the data pool 251, the model pool 252, and the computation pool 253 that support a target service. After receiving the fourth request instruction, the database 251 may create the data pool 251, the model pool 252, and the computation pool 253.

After creating the data pool 251, the model pool 252, and the computation pool 253, the service strategy network element 210 requests the Service-SMF network element 230 to manage a related session of the CSI compression feedback function. The Service-SMF network element 230 may establish traffic channels between the network device 110, the AMF network element 220, the Service-SMF network element 230, the service strategy network element 210, the data pool 251, the model pool 252, and the computation pool 253, so that the network device 110, the AMF network element 220, the Service-SMF network element 230, the service strategy network element 210, the data pool 251, the model pool 252, and the computation pool 253 can transmit traffic to each other. In addition, the Service-SMF network element 230 may establish a traffic channel between the terminal device 120 and the Service-UPF network element 240, so that the terminal device 120 and the Service-UPF network element 240 can transmit traffic to each other. The service strategy network element 210 may generate a service context of the CSI compression feedback function based on a related resource of each network element that performs the CSI compression feedback function, and send the service context to the network device 110.

In this case, the thirteenth response instruction is used to request the service setup system 200 to support the CSI compression feedback function, and then the network device 110 directly performs Step S706 and Step S707.

In another embodiment, a function of the thirteenth request instruction may be similar to a function of the eleventh request instruction, and the thirteenth request instruction is used to request to obtain a service context that is generated by another network device 110, the terminal device 120, or the service setup system 200 and that supports the CSI compression feedback function. For a specific implementation process, refer to the process of Step S603 to Step S605 in FIG. 6. In this case, the thirteenth response instruction carries the service context supporting the CSI compression feedback function, and then the network device 110, the terminal device 120, and the service setup system 200 directly perform Step S704 to Step S707.

In embodiments of this application, when the terminal device 120 performs the CSI compression feedback function by using the network device 110, if the network device 110 does not support the CSI compression feedback function, the terminal device 120 may construct the service context of the CSI compression feedback function by using the network device 110 and/or the service setup system 200. After obtaining the service context of the CSI compression feedback function, the network device 110 may support the CSI compression feedback function, to ensure continuity of running the CSI compression feedback function by the terminal device 120.

FIG. 8 is a diagram of a structure of a service setup apparatus according to an embodiment of this application. As shown in FIG. 8, the service setup apparatus 800 may perform the processes performed by the network device or the core network in the embodiments shown in FIG. 3, FIG. 5, FIG. 6, and FIG. 7. For details, refer to related descriptions in the foregoing method embodiments. The service setup apparatus 800 may be divided into a transceiver unit 810 and a processing unit 820 based on executed functions.

The transceiver unit 810 may be configured to implement a corresponding communication function. The transceiver unit 810 may also be referred to as a communication interface or a communication module.

The processing unit 820 is configured to process data.

Optionally, the service setup apparatus 800 further includes a storage unit. The storage unit may be configured to store instructions and/or data. The processing unit 820 may read the instructions and/or the data in the storage unit, so that the service setup apparatus 800 implements the foregoing method embodiments.

The service setup apparatus 800 may be configured to perform the actions performed by the network device in the foregoing method embodiments. The service setup apparatus 800 may be a network device or a component that can be configured in the network device. The processing unit 820 is configured to perform the processing-related operations on a network device side in the foregoing method embodiments. The transceiver unit 810 is configured to perform the receiving-related operations on the network device side in the foregoing method embodiments.

Alternatively, the service setup apparatus 800 may be configured to perform the actions performed by the core network device in the foregoing method embodiments. The service setup apparatus 800 may be a core network or a component that can be configured in the core network. The processing unit 820 is configured to perform the processing-related operations on a core network side in the foregoing method embodiments. The transceiver unit 810 is configured to perform the receiving-related operations on the core network side in the foregoing method embodiments.

Optionally, the transceiver unit 810 may include a sending unit and a receiving unit. The sending unit is configured to perform a sending operation in the foregoing method embodiments. The receiving unit is configured to perform a receiving operation in the foregoing method embodiments.

It needs to be noted that the service setup apparatus 800 may include the sending unit, but does not include the receiving unit. Alternatively, the communication apparatus 800 may include the receiving unit, but does not include the sending unit. This may be specifically determined depending on whether the foregoing solutions performed by the service setup apparatus 800 include a sending action and a receiving action.

In another case, the service setup apparatus 800 may perform functions of the service setup system 200 (namely, the core network) described in FIG. 3. Details are as follows.

The transceiver unit 810 is configured to receive a second request instruction sent by a terminal device. The second request instruction is used to request a target service supported by the service setup system, and the second request instruction includes a service context identifier. The processing unit 820 is configured to determine a service context of the target service based on the service context identifier. The service context includes related resources of one or more network elements that support the target service. The transceiver unit 810 is further configured to send a second response instruction to the terminal device. The second response instruction is used to notify the terminal device that the service setup system supports the target service.

In an implementation, the processing unit 820 is further configured to set the target service to be in an inactive state. The inactive state means that the related resources of the one or more network elements that support the target service are in a sleep state.

In an implementation, the processing unit 820 is specifically configured to: generate a service strategy of the target service based on the service context identifier; and configure, based on the service strategy of the target service, a related resource of each network element that executes the target service.

In an implementation, the transceiver unit 810 is further configured to receive an eleventh request instruction sent by the network device. The eleventh request instruction is used to request another network device to provide a service context corresponding to at least one service context identifier. The transceiver unit 810 is further configured to send an eleventh response instruction to the network device. The eleventh response instruction includes the service context corresponding to the at least one service context identifier.

In an implementation, the transceiver unit 810 is further configured to receive a first request instruction sent by the network device. The transceiver unit 810 is further configured to send service function information to the network device. The service function information includes a service type and/or a function type that each network element supporting the target service is capable of providing, and the service type and/or the function type that each network element supporting the target service is capable of providing are/is used to generate a service context of the target service in the network device.

In another case, the service setup apparatus 800 may perform the functions of the network device 110 described in FIG. 5. Details are as follows.

The transceiver unit 810 is configured to receive a first request instruction sent by a terminal device. The first request instruction is used to request a target service supported by the network device. The first request instruction includes a service context identifier. The transceiver unit 810 is further configured to: when it is determined that a service context of the target service does not exist locally, send a seventh request instruction to the service setup system. The seventh request instruction is used to request the core network to provide service function information supporting the target service, and the service function information includes a service type and/or a function type that each network element supporting the target service is capable of providing. The transceiver unit 810 is further configured to receive the service function information sent by the service setup system. The processing unit 820 is configured to determine all or a part of the service context of the target service based on the service type and/or the function type that each network element supporting the target service is capable of providing. The service context of the target service includes related resources of one or more network elements supporting the target service.

In an implementation, the processing unit 820 is further configured to set the service context of the target service to be in an inactive state. The inactive state means that the related resources of the one or more network elements that support the target service are in a sleep state.

In an implementation, the processing unit 820 is further configured to: when determining that the service context of the target service exists locally, determine whether an area identifier in the service context of the target service is the same as a local area identifier. The area identifier is used to distinguish a geographical area in which the service context takes effect. The transceiver unit 810 is further configured to: when the area identifier in the service context of the target service is different from the local area identifier, send a ninth request instruction to the terminal device. The ninth request instruction is used to request the terminal device to determine whether the network device generates a service context of the target service again.

In an implementation, the transceiver unit 810 is further configured to receive an eighth request instruction sent by the terminal device. The eighth request instruction is used to request the network device to execute the target service. The processing unit 820 is further configured to set the service context of the target service to be in an active state.

In an implementation, the transceiver unit 810 is further configured to configure an air interface resource for the terminal device. The air interface resource is used to carry traffic for transmitting the target service between the terminal device and the network device.

In an implementation, the transceiver unit 810 is further configured to broadcast or multicast a system message. The system message indicates that the network device supports the target service.

In another case, the service setup apparatus 800 may perform the functions of the network device 110 described in FIG. 6. Details are as follows.

The transceiver unit 810 is configured to send a tenth request instruction to a terminal device. The tenth request instruction is used to request to query for a service context in the terminal device. The transceiver unit 810 is further configured to receive a tenth response instruction sent by the terminal device. The tenth response instruction includes at least one service context. The transceiver unit 810 is further configured to broadcast an eleventh request instruction. The eleventh request instruction is used to request to provide a service context corresponding to at least one service context identifier. The transceiver unit 810 is further configured to receive an eleventh response instruction. The eleventh response instruction includes the service context corresponding to the at least one service context identifier. The processing unit 820 is configured to update, based on the service context corresponding to the at least one service context identifier, a service context corresponding to the at least one service context identifier.

In one case, the service setup apparatus 800 may perform the functions of the network device 110 described in FIG. 3, FIG. 5, FIG. 6, and FIG. 7. Details are as follows.

The transceiver unit 810 is configured to send a seventh request instruction to the core network. The seventh request instruction is used to request the core network to provide service function information supporting the target service, and the service function information includes a service type and/or a function type that each network element supporting the target service is capable of providing. The transceiver unit 810 is further configured to receive the service function information sent by the core network. The processing unit 820 is configured to determine all or a part of the service context of the target service based on the service type and/or the function type that each network element supporting the target service is capable of providing. The service context of the target service includes related resources of one or more network elements supporting the target service.

In an implementation, the processing unit 820 is further configured to set the service context of the target service to be in an inactive state. The inactive state means that the related resources of the one or more network elements that support the target service are in a sleep state.

In an implementation, the transceiver unit 810 is further configured to receive a first request instruction sent by the terminal device. The first request instruction is used to request a target service supported by the network device. The processing unit 820 is further configured to detect whether a service context of the target service exists locally. The transceiver unit 810 is further configured to: when it is determined that the service context of the target service does not exist locally, send a seventh request instruction to the core network.

In an implementation, the processing unit 820 is further configured to: when determining that the service context of the target service exists locally, determine whether an area identifier in the service context of the target service is the same as a local area identifier. The area identifier is used to distinguish a geographical area in which the service context takes effect. The transceiver unit 810 is further configured to: when the area identifier in the service context of the target service is different from the local area identifier, send a ninth request instruction to the terminal device. The ninth request instruction is used to request the terminal device to determine whether the network device generates a service context of the target service again.

In an implementation, the transceiver unit 810 is further configured to send a first response instruction to the terminal device. The first response instruction is used to notify the terminal device that the network device supports the target service.

In an implementation, the transceiver unit 810 is further configured to receive an eighth request instruction sent by the terminal device. The eighth request instruction is used to request the network device to execute the target service. The processing unit 820 is further configured to set the service context of the target service to be in an active state.

In an implementation, the processing unit 820 is further configured to configure an air interface resource for the terminal device. The air interface resource is used to carry traffic for transmitting the target service between the terminal device and the network device.

In an implementation, the transceiver unit 810 is further configured to broadcast or multicast a system message. The system message is used to request the network device to support the target service.

In an implementation, the transceiver unit 810 is further configured to send a tenth request instruction to the terminal device. The tenth request instruction is used to request to query for a service context in the terminal device. The transceiver unit 810 is further configured to receive a tenth response instruction sent by the terminal device. The tenth response instruction includes at least one service context identifier. The processing unit 820 is further configured to update, based on the at least one service context identifier, a service context corresponding to the at least one service context identifier.

In an implementation, the transceiver unit 810 is specifically configured to broadcast an eleventh request instruction. The eleventh request instruction is used to request another network device to provide a service context corresponding to at least one service context identifier. The transceiver unit 810 is specifically configured to receive an eleventh response instruction. The eleventh response instruction includes the service context corresponding to the at least one service context identifier. The processing unit 820 is specifically configured to update, based on the service context corresponding to the at least one service context identifier, a service context corresponding to the at least one service context identifier.

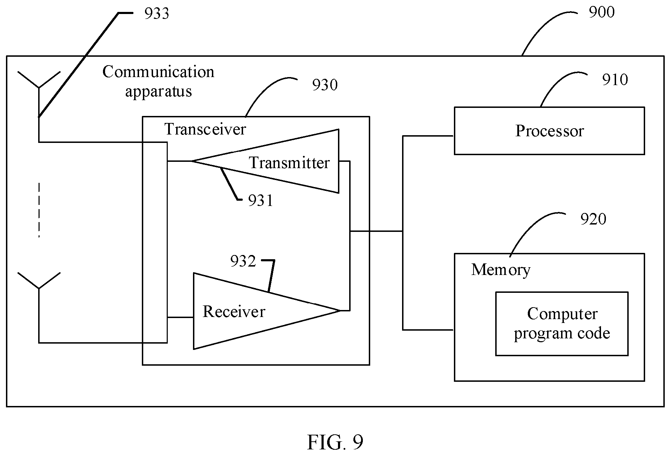

FIG. 9 is a diagram of a structure of another service setup apparatus according to an embodiment of this application. As shown in FIG. 9, this application further provides a service setup apparatus 900. The service setup apparatus 900 may be a network device or may be a chip. The service setup apparatus 900 may be configured to perform the operations performed by the network device in any one of the embodiments shown in FIG. 3, FIG. 5, FIG. 6, and FIG. 7, or perform the operations performed by the core network device in any one of the embodiments shown in FIG. 3 and FIG. 7.

When the service setup apparatus 900 is a network device, for example, a base station, FIG. 9 is a diagram of a simplified structure of the base station. The base station includes a part 910, a part 920, and a part 930.

The part 910 is mainly configured to: perform baseband processing, control the base station, and the like. The part 910 is usually a control center of the base station, may be usually referred to as a processor, and is configured to control the base station to perform a processing operation on a network device side in the foregoing method embodiments.

The part 920 is mainly configured to store computer program code and data. The part 930 is mainly configured to: receive and send a radio frequency signal and perform conversion between a radio frequency signal and a baseband signal.

The part 930 may be usually referred to as a transceiver unit, a transceiver device, a transceiver circuit, a transceiver, or the like. A transceiver unit in the part 930 may also be referred to as a transceiver machine, a transceiver, or the like, and includes an antenna 933 and a radio frequency circuit (not shown in the figure). The radio frequency circuit is mainly configured to perform radio frequency processing. Optionally, a component that is in the part 930 and that is configured to implement a receiving function may be considered as a receiver machine, and a component that is in the part 930 and that is configured to implement a sending function may be considered as a transmitter machine. In other words, the part 930 includes a receiver machine 932 and a transmitter machine 931. The receiver may also be referred to as a receiving unit, a receiver machine, a receiving circuit, or the like, and the transmitter may be referred to as a transmitting unit, a transmitter machine, a transmitting circuit, or the like.

The part 910 and the part 920 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards share one or more processors at the same time.

For example, a transceiver module in the part 930 is configured to perform a receiving/sending-related process performed by the network device in any one of the embodiments shown in FIG. 3, FIG. 5, FIG. 6, and FIG. 7. A processor in the part 910 is configured to perform a processing-related process performed by the network device in any one of the embodiments shown in FIG. 3, FIG. 5, FIG. 6, and FIG. 7.

It should be understood that FIG. 9 is merely an example instead of a limitation, and the network device including the processor, the memory, and the transceiver may not depend on the structure shown in FIG. 8.

When the service setup apparatus 900 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

An embodiment of this application further provides a chip apparatus, including a processor, configured to invoke a computer degree or computer instructions stored in a memory, to enable the processor to perform the method provided in any one of the embodiments shown in FIG. 3, FIG. 5, FIG. 6, and FIG. 7.

In a possible implementation, an input of the chip apparatus corresponds to a receiving operation in any one of the embodiments shown in FIG. 3, FIG. 5, FIG. 6, and FIG. 7, and an output of the chip apparatus corresponds to a sending operation in any one of the embodiments shown in FIG. 3, FIG. 5, FIG. 6, and FIG. 7.

Optionally, the processor is coupled to a memory through an interface.

Optionally, the chip apparatus further includes the memory, and the memory stores the computer degree or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the method provided in any one of embodiments shown in FIG. 3, FIG. 5, FIG. 6, and FIG. 7. The memory mentioned in any one of the foregoing descriptions may be a read-only memory (read-only memory, ROM), another type of static storage device that can store static information and instructions, a random access memory (random access memory, RAM), or the like.

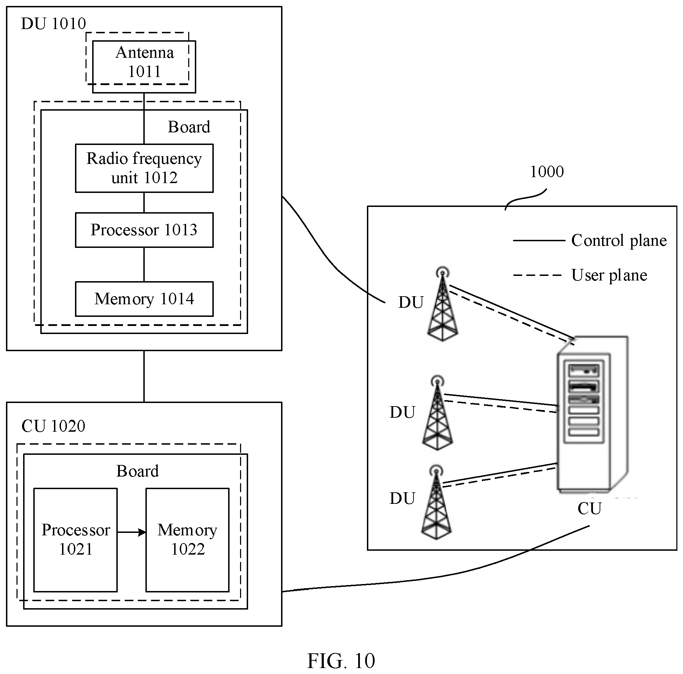

When the service setup apparatus 900 is a base station, FIG. 10 is a diagram of a structure of the base station according to an embodiment of this application. As shown in FIG. 10, the functions of the network device 110 in the service setup method embodiments corresponding to FIG. 3, FIG. 5, FIG. 6, and FIG. 7 are performed. The base station 1000 may include one or more DUs 1010 and one or more CUs 1020. The DU 1010 may include at least one antenna 1011, at least one radio frequency unit 1012, at least one processor 1013, and at least one memory 1014. The DU 1010 is mainly configured to receive or send a radio frequency signal, perform conversion between a radio frequency signal and a baseband signal, and perform partial baseband processing. The CU 1020 may include at least one processor 1021 and at least one memory 1022. The CU 1020 and the DU 1010 may communicate with each other through an interface. A control plane (control plane) interface may be an Fs-C, for example, F1-C, and a user plane (user plane) interface may be an Fs-U, for example, F1-U.

The CU 1020 is mainly configured to perform baseband processing, control the base station, and the like. The DU 1010 and the CU 1020 may be physically disposed together, or may be physically separated, namely, a distributed base station. The CU 1020 is a control center of the base station, may also be referred to as a processing unit, and is mainly configured to implement a baseband processing function. For example, the CU 1020 may be configured to control the base station 1000 to perform an operation procedure related to the network device 110 in the foregoing method embodiments.

Specifically, baseband processing performed by the CU and the DU may be divided based on protocol layers of a wireless network. For example, functions of a PDCP layer and protocol layers above the PDCP layer are set on the CU, and functions of protocol layers below the PDCP layer, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the base station 1000 may include one or more radio frequency units (RUs), one or more DUs, and one or more CUs. The DU may include at least one processor 1013 and at least one memory 1014, the RU may include at least one antenna 1011 and at least one radio frequency unit 1012, and the CU may include at least one processor 1021 and at least one memory 1022.

In an instance, the CU 1020 may include one or a plurality of boards, and the plurality of boards may jointly support a radio access network (for example, a 6G network) of a single access standard, or may separately support radio access networks (for example, an LTE network, a 6G network, or another network) of different access standards. The processor 1021 and the memory 1022 may serve one or more boards. In other words, a memory and a processor may be disposed on each board. Alternatively, a plurality of boards may share a same memory and a same processor. In addition, a necessary circuit may further be disposed on each board. The DU 801 may include one or a plurality of boards, and the plurality of boards may jointly support a radio access network (for example, a 6G network) of a single access standard, or may separately support radio access networks (for example, an LTE network, a 6G network, or another network) of different access standards. The memory 1014 and the processor 1013 may serve the one board or the plurality of boards. In other words, a memory and a processor may be disposed on each board. The plurality of boards may share a same memory and a same processor. In addition, a necessary circuit may further be disposed on each board.

The DU and the CU may jointly perform the functions of the processor 920 in the service setup apparatus 900 shown in FIG. 9. Details are not described again.

An embodiment of this application further provides a computer-readable storage medium, including computer program instructions. When the computer program instructions are executed by a core network, the core network performs the method according to any one of FIG. 3, FIG. 7, and the corresponding description content.

An embodiment of this application further provides a computer-readable storage medium, including computer program instructions. When the computer program instructions are executed by a network device, the network device performs the method according to any one of FIG. 3, FIG. 5, FIG. 6, FIG. 7, and the corresponding description content.

An embodiment of this application further provides a computer program product including instructions. The computer program product stores the instructions. When the instructions are executed by a core network, the core network is enabled to implement any method recorded in FIG. 3, FIG. 7, and the corresponding description content.

An embodiment of this application further provides a computer program product including instructions. The computer program product stores the instructions. When the instructions are executed by a network device, the network device is enabled to implement any method recorded in FIG. 3, FIG. 5, FIG. 6, FIG. 7, and the corresponding description content.

Persons of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of embodiments of this application.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.

In the foregoing embodiment, the service setup apparatus 800 in FIG. 8 may be all or partially implemented by using software, hardware, firmware, or any combination thereof. When being implemented by using the software, the service setup apparatus 800 in FIG. 8 may be all or partially implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. A computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

It should be understood that sequence numbers of the foregoing processes do not mean execution sequences in various embodiments of this application. The execution sequences of the processes need to be determined based on functions and internal logic of the processes, and should not be construed as any limitation on the implementation processes of embodiments of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

When the functions are implemented in the form of a software functional unit and sold or used as an independent product, the functions may be stored in a computer-readable storage medium. Based on such an understanding, the technical solutions of embodiments of this application essentially, or the part contributing to the current technology, or a part of the technical solutions may be implemented in a form of a software product. The computer software product is stored in a storage medium, and includes several instructions for instructing a computer device (which may be a personal computer, a server, or an access network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

## Claims

1. A service setup method, wherein the method is performed by a network device and a core network, and the method comprises:
sending, by the network device, a seventh request instruction to the core network, wherein the seventh request instruction is used to request the core network to provide service function information supporting a target service, and the service function information comprises a service type and/or a function type that each network element supporting the target service is capable of providing;
receiving, by the core network, the seventh request instruction, and sending the service function information to the network device; and
determining, by the network device, all or a part of a service context of the target service based on the service type and/or the function type that each network element supporting the target service is capable of providing, wherein the service context of the target service comprises related resources of one or more network elements supporting the target service.

2. The method according to claim 1, wherein the method further comprises:
setting, by the network device, the service context of the target service to be in an inactive state, wherein the inactive state means that the related resources of the one or more network elements supporting the target service are in a sleep state.

3. The method according to claim 1 or 2, wherein before sending, by the network device, the seventh request instruction to the core network, the method further comprises:
receiving, by the network device, a first request instruction sent by a terminal device, wherein the first request instruction is used to request the target service supported by the network device; and
detecting, by the network device, whether the service context of the target service exists locally; and
sending, by the network device, the seventh request instruction to the core network specifically comprises:
when determining that the service context of the target service does not exist locally, sending, by the network device, the seventh request instruction to the core network.

4. The method according to claim 3, wherein the method further comprises:
when determining that the service context of the target service exists locally, determining, by the network device, whether an area identifier in the service context of the target service is the same as a local area identifier, wherein the area identifier is used to distinguish a geographical area in which the service context takes effect; and
when the area identifier in the service context of the target service is different from the local area identifier, sending, by the network device, a ninth request instruction to the terminal device, wherein the ninth request instruction is used to request the terminal device to determine whether the network device generates a service context of the target service again.

5. The method according to claim 3 or 4, wherein the method further comprises:
sending, by the network device, a first response instruction to the terminal device, wherein the service response instruction is used to notify the terminal device that the network device supports the target service.

6. The method according to any one of claims 1 to 5, wherein the method further comprises:
receiving, by the network device, an eighth request instruction sent by the terminal device, wherein the eighth request instruction is used to request the network device to execute the target service; and
setting, by the network device, the service context of the target service to be in an active state.

7. The method according to any one of claims 1 to 6, wherein the method further comprises:
configuring, by the network device, an air interface resource for the terminal device, wherein the air interface resource is used to carry traffic for transmitting the target service between the terminal device and the network device.

8. The method according to any one of claims 1 to 7, wherein the method further comprises:
broadcasting or multicasting, by the network device, a system message, wherein the system message indicates that the network device supports the target service.

9. The method according to any one of claims 1 to 8, wherein the method further comprises:
sending, by the network device, a tenth request instruction to the terminal device, wherein the tenth request instruction is used to request to query for a service context in the terminal device;
receiving, by the network device, a tenth response instruction sent by the terminal device, wherein the tenth response instruction comprises at least one service context identifier; and
updating, by the network device based on the at least one service context identifier, a service context corresponding to the at least one service context identifier.

10. The method according to claim 9, wherein updating, by the network device based on the at least one service context identifier, the service context corresponding to the at least one service context identifier specifically comprises:
broadcasting, by the network device, an eleventh request instruction, wherein the eleventh request instruction is used to request another network device to provide a service context corresponding to the at least one service context identifier;
receiving, by the network device, an eleventh response instruction, wherein the eleventh response instruction comprises the service context corresponding to the at least one service context identifier; and
updating, by the network device based on the service context corresponding to the at least one service context identifier, the service context corresponding to the at least one service context identifier.

11. A service setup apparatus, comprising:
a transceiver unit, configured to send a seventh request instruction to the core network, wherein the seventh request instruction is used to request the core network to provide service function information supporting a target service, and the service function information comprises a service type and/or a function type that each network element supporting the target service is capable of providing, wherein
the transceiver unit is further configured to receive the service function information sent by the core network; and
a processing unit, configured to determine all or a part of a service context of the target service based on the service type and/or the function type that each network element supporting the target service is capable of providing, wherein the service context of the target service comprises related resources of one or more network elements supporting the target service.

12. The apparatus according to claim 11, wherein the processing unit is further configured to set the service context of the target service to be in an inactive state, wherein the inactive state means that the related resources of the one or more network elements supporting the target service are in a sleep state.

13. The apparatus according to claim 11 or 12, wherein
the transceiver unit is further configured to receive a first request instruction sent by a terminal device, wherein the first request instruction is used to request the target service supported by the network device; and
the processing unit is further configured to detect whether the service context of the target service exists locally; and
the transceiver unit is further configured to: when it is determined that the service context of the target service does not exist locally, send the seventh request instruction to the core network.

14. The apparatus according to claim 13, wherein the processing unit is further configured to: when determining that the service context of the target service exists locally, determine whether an area identifier in the service context of the target service is the same as a local area identifier, wherein the area identifier is used to distinguish a geographical area in which the service context takes effect; and
when the area identifier in the service context of the target service is different from the local area identifier, send a ninth request instruction to the terminal device, wherein the ninth request instruction is used to request the terminal device to determine whether the network device generates a service context of the target service again.

15. The apparatus according to claim 13 or 14, wherein the transceiver unit is further configured to:
sending a first response instruction to the terminal device, wherein the first response instruction is used to notify the terminal device that the network device supports the target service.

16. The apparatus according to any one of claims 11 to 15, wherein the transceiver unit is further configured to receive an eighth request instruction sent by the terminal device, wherein the eighth request instruction is used to request the network device to execute the target service; and
the processing unit is further configured to set the service context of the target service to be in an active state.

17. The apparatus according to any one of claims 11 to 16, wherein the processing unit is further configured to:
configure an air interface resource for the terminal device, wherein the air interface resource is used to carry traffic for transmitting the target service between the terminal device and the network device.

18. The apparatus according to any one of claims 11 to 17, wherein the transceiver unit is further configured to broadcast or multicast a system message, wherein the system message indicates that the network device supports the target service.

19. The apparatus according to any one of claims 1 to 8, wherein the transceiver unit is further configured to: send a tenth request instruction to the terminal device, wherein the tenth request instruction is used to request to query for a service context in the terminal device; and
receive a tenth response instruction sent by the terminal device, wherein the tenth response instruction comprises at least one service context identifier; and
the processing unit is further configured to update, based on the at least one service context identifier, a service context corresponding to the at least one service context identifier.

20. The apparatus according to claim 19, wherein the transceiver unit is specifically configured to broadcast an eleventh request instruction, wherein the eleventh request instruction is used to request another network device to provide a service context corresponding to the at least one service context identifier;
the transceiver unit is specifically configured to receive an eleventh response instruction, wherein the eleventh response instruction comprises the service context corresponding to the at least one service context identifier; and
the processing unit is specifically configured to update, based on the service context corresponding to the at least one service context identifier, the service context corresponding to the at least one service context identifier.

21. A network device, comprising:
at least one transceiver; and
at least one transceiver, wherein the processor is configured to execute instructions stored in a memory, so that the network device is enabled to perform the method according to any one of claims 1 to 10.

22. A computer-readable storage medium, comprising computer program instructions, wherein when the computer program instructions are executed by a network device, the network device performs the method according to any one of claims 1 to 10.
